# EUROPEAN PATENT SPECIFICATION

(11) **EP 4 593 095 B1**
(45) Date of publication and mention of the grant of the patent: **02.12.2026**
(21) Application number: 24164451.7
(22) Date of filing: 19.03.2024
(51) Int. Cl.: H01M 4/04, H01M 10/04

(54) **METHOD AND SYSTEM FOR MONITORING A BATTERY MANUFACTURING PROCESS**
VERFAHREN UND SYSTEM ZUR ÜBERWACHUNG EINES BATTERIEHERSTELLUNGSPROZESSES
PROCÉDÉ ET SYSTÈME DE SURVEILLANCE D'UN PROCESSUS DE FABRICATION DE BATTERIE

(30) Priority: 29.01.2024 KR 20240013083
(43) Date of publication of application: 30.07.2025
(73) Proprietor: LG Energy Solution, Ltd., Seoul 07335 (KR)
(72) Inventor: SIM, Min Kyu, 34122 Daejeon (KR); KOH, Jee Yeon, 34122 Daejeon (KR); KIM, Min Su, 34122 Daejeon (KR); PARK, Jong Seok, 34122 Daejeon (KR); KIM, June Hee, 34122 Daejeon (KR); SHIN, Jong Kwon, 34122 Daejeon (KR)
(74) Representative: BCKIP Part mbB

(56) References cited:
- EP-A1- 4 156 317
- WO-A1-2024/049127
- CN-A- 102 916 160
- KR-B1- 102 615 413

## Description

### [Technical Field of the Invention]

The present invention relates to a method and a system for monitoring a battery manufacturing process.

### [Background of the Invention]

Unlike primary batteries, secondary batteries can be charged or discharged a plurality of times. The secondary batteries are widely used as energy sources for various wireless devices such as handsets, notebook computers, cordless vacuum cleaners, and the like. Recently, the manufacturing cost per unit capacity of a secondary battery has been significantly reduced due to improvements in energy density and economies of scale, and as the traveling distance of a battery electric vehicle (BEV) increases to the same level as that of a fuel vehicle, the main use of secondary battery is shifting from a mobile device to mobility.

A secondary battery is manufactured through an electrode process, an assembly process, and an activation process. Among the above processes, the electrode process is the most critical process in determining the yield and performance of battery cells. The electrode process may include a coating process, a roll pressing process, and a slitting process. In the coating process, a surface of a current collector may be coated with an active material and an insulating material. In the roll pressing process, an electrode may be pressed by pressing rolls. The roll pressing process may determine the density, performance, and surface quality of the electrode. In the slitting process, the electrode may be cut into a plurality of electrodes depending on the battery cell design.

Korean Laid-open Patent Publication No. 10-2022-0134303 describes a method for monitoring a coating process of an electrode sheet, wherein an electrode sheet is continuously coated with slurry, and data related to quality or defects are measured in the electrode coating process. The measured data is visually displayed at a certain position on a roll map bar corresponding to the position of the electrode at which the pieces of data are measured. The roll map bar is a visual imitation of the electrode sheet moving in the coating process.

CN 102916160 A discloses an apparatus for forming an electrode for a battery. The apparatus comprises an active material applying unit for applying an active material on a continuous electrode sheet to form a plurality of active material regions in the longitudinal direction of the electrode sheet, a density measuring unit for measuring the density of the active material of each of the active material regions, a position calculation unit for calculating position coordinates of the measured active material region via the density measuring unit, and an overall controller for associated storage of the position coordinates of the measured active material region outputted by the position calculation unit and the density measuring values outputted by the density measuring unit. Since the density measuring values of the active material and the position coordinates of the measured region are detected and stored in association, occurrence of a defect and the position of the defect can be recognized.

EP 4 156 317 A1 discloses generating a roll map of an electrode coating process.

While the conventional roll map concept allows to improve quality traceability where an electrode sheet is continuously coated, there is a room for further improvement in tracing quality of patterned electrodes in which only parts of the electrode are coated.

KR 102615413B1 discloses a system and corresponding method for monitoring an electrode manufacturing process, specifically for measuring electrode loss and generating a roll map, wherein a roll map is generated for each sub-process and the roll maps of the sub-processes are matched/cross-referenced, such that the same physical position of the electrode corresponds across the sub-processes.

### [Summary of the Invention]

It is an object of the present invention to provide a solution that enables improved quality traceability and data match in a battery manufacturing process, particularly involving patterned electrodes.

To this end, the present invention provides a method in accordance with claim 1 and a system in accordance with claim 10.

According to an aspect of the present invention, a method for monitoring a battery manufacturing process is provided in which a patterned electrode sheet is formed or processed in multiple sub-processes, wherein the patterned electrode sheet includes a plurality of coating patterns, each coating pattern having at least one coated and one uncoated portion. The method may comprise at least one of the following steps: acquiring, while the patterned electrode sheet moves through the battery manufacturing process, pattern identification data including pattern identification codes indicating positions of the respective coating patterns on the electrode sheet; acquiring measurement data and/or inspection data by measuring and/or inspecting the electrode sheet while it moves through the battery manufacturing process, the measurement data and/or inspection data including a plurality of measurement and/or inspection values for each coating pattern; generating monitoring data for the multiple sub-processes by associating the measurement data and/or inspection data with the pattern identification data; and matching the monitoring data generated for respective sub-processes such that pattern identification data of one sub-process and pattern identification date of another sub-process are matched with each other, insofar as they are acquired from an identical physical part of the electrode sheet.

The pattern identification data of a following sub-process carried out subsequent to a preceding process may be matched according to at least one of the following: when start and end portions of the electrode sheet are inverted in the following sub-process compared to the preceding sub-process, the pattern identification data of the preceding/following sub-process is inverted and matched to the pattern identification data of the following/preceding sub-process; when a top and a bottom surface of the electrode sheet is inverted in the following sub-process compared to the preceding sub-process, the pattern identification data acquired on the top surface in the preceding/following sub-process is matched with the pattern identification data acquired on the bottom surface in the following/preceding sub-process; and when a part of the electrode sheet is removed during the preceding sub-process or between the preceding and the following sub-process, the pattern identification data of a remaining part of the electrode sheet acquired in the following sub-process is matched with the pattern identification data of a corresponding part of the electrode sheet acquired in the preceding sub-process before removal.

The method may further comprise: based on the monitoring data, generating processed monitoring data with compressed measurement data and/or inspection data, by reducing the amount of measurement and/or inspection values associated with the pattern identification data.

Reducing the amount of measurement and/or inspection values associated with the pattern identification data may include: selecting, for a respective coating pattern or group of coating patterns respectively represented by the pattern identification data, a subset of the plurality of measurement and/or inspection values associated with the respective coating pattern or group of coating patterns, and may further include: replacing the plurality of measurement and/or inspection values associated with the respective coating pattern or group of coating patterns by the selected subset of measurement and/or inspection values.

Reducing the amount of measurement and/or inspection values associated with the pattern identification data may include: determining a representative measurement and/or inspection value based on the plurality of measurement and/or inspection values associated with a respective coating pattern or group of coating patterns respectively represented by the pattern identification data, and may further include: replacing the plurality of measurement and/or inspection values associated with the respective coating pattern or group of coating patterns by the representative measurement and/or inspection value.

The method may further comprise: acquiring coordinate data that indicates longitudinal positions on the electrode sheet. Herein, generating the monitoring data may include associating the coordinate data with the pattern identification data and the measurement data and/or inspection data.

The pattern identification data, the measurement data and/or inspection data, and, optionally, the coordinate data may be acquired as time series data and associated with each other such that they share common time values at which they are acquired.

The method may further comprise: generating a roll map for one or more of the sub-processes based on the processed monitoring data. Herein, the roll map may be a visual representation of the electrode in which the pattern identification data of the respective sub-process and the compressed measurement data and/or inspection data for the respective sub-process associated with the pattern identification data are displayed.

The method may further comprise: generating a roll map for the multiple sub-processes based on the monitoring data. Herin, the roll map may be a visual representation of the electrode in which the pattern identification data of the respective one of the sub-processes are displayed. The generated roll maps may be matched with each other so that the pattern identification data acquired in respective sub-processes are matched with one another, insofar as they are acquired from an identical physical part of the electrode sheet.

According to another aspect of the present invention, a system for monitoring a battery manufacturing process may be provided. The system may comprise at least one of: a first position measuring device configured to acquire the pattern identification data; and a measuring and/or an inspecting device configured to acquire the measurement data and/or inspection data. The system may be configured to generate the monitoring data for the multiple sub-processes by associating the measurement data and/or inspection data with the pattern identification data and to match the monitoring data generated for respective sub-processes such that pattern identification data of one sub-process and pattern identification date of another sub-process are matched with each other, insofar as they are acquired from an identical physical part of the electrode sheet.

The system may be further configured, based on the monitoring data, to generate the processed monitoring data with compressed measurement data and/or inspection data, by reducing the amount of measurement and/or inspection values associated with the pattern identification data.

The system may further comprise: a server system in signal communication with the first position measuring device and the measuring and/or an inspecting device. Herein, the server system may be configured to generate the monitoring data and match the monitoring data generated for respective sub-processes, and optionally, to generate the processed monitoring data.

The server system may be configured to generate a roll map for one or more of the sub-processes based on the processed monitoring data, and to cause a display device to display the generated roll map(s).

The server system may be configured to generate a roll map for the multiple sub-processes based on the monitoring data, and to cause a display device to display the generated roll maps.

The system may further comprise: a second position measuring instrument configured to acquire the coordinate data. The system may be configured to associate the coordinate data with the pattern identification data and the measurement data and/or inspection data to generate the monitoring data.

The system may further comprise: a controller configured to control movement of the electrode sheet. The controller and/or the measuring and/or an inspecting device may be configured to associate the pattern identification data with the measurement data and/or inspection data and, optionally, with the coordinate data to generate the monitoring data.

According to yet another aspect of the present invention is provided a method for monitoring a battery manufacturing process in which a patterned electrode sheet is formed or processed in multiple sub-processes, wherein the patterned electrode sheet includes a plurality of coating patterns, each coating pattern having at least one coated and one uncoated portion. The method may comprise at least one of the following steps: acquiring, while the patterned electrode sheet moves through the battery manufacturing process, pattern identification data including pattern identification codes indicating positions of the respective coating patterns on the electrode sheet; acquiring measurement data and/or inspection data by measuring and/or inspecting the electrode sheet while it moves through the battery manufacturing process, the measurement data and/or inspection data including a plurality of measurement and/or inspection values for each coating pattern; generating monitoring data by associating the measurement data and/or inspection data with the pattern identification data; and based on the monitoring data, generating processed monitoring data with compressed measurement data and/or inspection data, by reducing the amount of measurement and/or inspection values associated with the pattern identification data.

Monitoring data may be generated for the multiple sub-processes in which the patterned electrode sheet is formed or processed.

The method may further include: matching the monitoring data generated for respective sub-processes, such that pattern identification data of one sub-process and pattern identification date of another sub-process are matched with each other, insofar as they are acquired from an identical physical part of the electrode sheet.

According to the present invention, monitoring data for battery manufacturing process can be generated using position data (pattern number data, coordinate data) that reflects pattern positions on the electrodes having patterns. Therefore, battery manufacturing processes can be monitored to match the state of the physical patterned electrode, and thus quality traceability and data match can be improved.

Further, the present invention can generate inter-process monitoring data by matching pattern number data acquired in each process so as to correspond to a position of the same physical electrode sheet. Through the inter-process monitoring data, changes in electrode length between a plurality of processes or changes in the quality of each electrode can be intuitively identified to be matched with the position of the electrode. Further, when there is a problem with electrode quality, the problem can be tracked rapidly and easily.

Further, the present invention can generate monitoring data by compressing measurement data and/or inspection data. Therefore, resources of a server allocated to generating and storing the monitoring data can be reduced.

Effects obtainable in exemplary embodiments of the present invention are not limited to the effects described above, and other effects that are not described can be clearly derived and understood by those skilled in the art from the following detailed descriptions to which the exemplary embodiments of the present invention pertain. That is, unintended effects resulting from implementing exemplary embodiments of the present invention may also be derived by those skilled in the art from the exemplary embodiments of the present invention.

### [Brief Description of the Drawings]

FIG. 1 illustrates a battery manufacturing system according to exemplary embodiments.
FIG. 2 illustrates a visualized roll map and patterned electrodes.
FIG. 3 is a flowchart for describing a monitoring method according to an exemplary embodiment of the invention.
FIG. 4 illustrates a roll map of a patterned electrode in which loading amount measurement data is arranged over time.
FIG. 5 shows inter-process monitoring data generated by a monitoring method according to an exemplary embodiment of the present invention.
FIG. 6 is a schematic diagram illustrating a case in which a corresponding surface of an electrode sheet is inverted in an unwinding or winding direction of the electrode sheet during a battery manufacturing process.
FIG. 7 is a flowchart for describing a monitoring method according to an exemplary embodiment of the invention.
FIG. 8 illustrates a roll map of a patterned electrode on which pattern numbers and sub-pattern numbers are displayed.
FIG. 9 shows an example of a roll map in which pattern number data and coordinate data are displayed on a patterned electrode.
FIG. 10 shows inter-process monitoring data generated by a monitoring method according to an exemplary embodiment of the invention.
FIG. 11 illustrates a monitoring system according to an exemplary embodiment of the invention.

### [Detailed Description of the Exemplary Embodiments]

Hereinafter, exemplary embodiments of the present invention will be described in detail with reference to the accompanying drawings. Prior to this, terms and words used in this specification and claims should not be interpreted as being limited to commonly used meanings or meanings in dictionaries and should be interpreted with meanings and concepts which are consistent with the technological scope of the present invention based on the principle that the inventors have appropriately defined concepts of terms in order to describe the present invention in the best way.

In addition, in the description of the present invention, when it is determined that detailed descriptions of related well-known configurations or functions unnecessarily obscure the present invention, the detailed descriptions thereof will be omitted.

Since the embodiments of the present invention are provided to more completely explain the present invention to those skilled in the art, the shapes and sizes of components in the drawings may be exaggerated, omitted, or schematically illustrated for clearer description. Therefore, the size or ratio of each component does not entirely reflect the actual size or ratio.

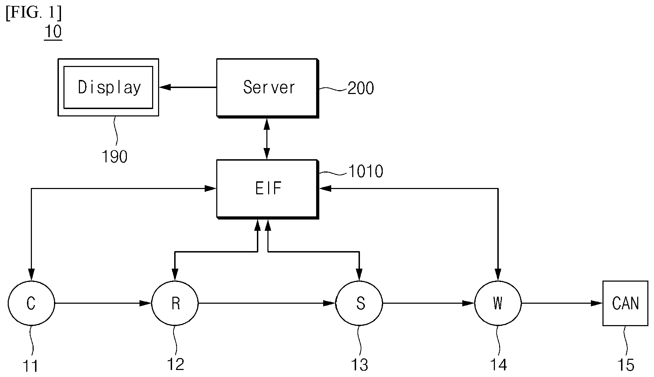

FIG. 1 illustrates a battery manufacturing system 10.

Referring to FIG. 1, the battery manufacturing system 10 may include a coating device 11, a roll pressing device 12, a slitting device 13, a winding device 14, a relay server (event integration facility (EIF)) 1010, a server system 200, and a display device 190.

The battery manufacturing system 10 may be configured to manufacture battery cells (e.g., cylindrical battery cells or prismatic battery cells) by performing a series of roll-to-roll processes. An electrode sheet unwound from a provided electrode roll may be processed by any one of a die coater of the coating device 11, pressing rolls of the roll pressing device 12, and a slitting knife of the slitting device 13, and the processed electrode sheet may be wound around the electrode roll. Accordingly, the processing of the coating device 11, the roll pressing device 12, and the slitting device 13 for production of electrodes of a battery may be referred to as a roll-to-roll process. The winding device 14 may wind a first electrode sheet (e.g., a negative electrode sheet) unwound from a first electrode roll (e.g., a negative electrode roll), a second electrode sheet (e.g., a positive electrode sheet) unwound from a second electrode roll (e.g., a positive electrode roll), and separator sheets unwound from separator rolls together.

The EIF 1010 may be a device for communication between process controllers of a manufacturing facility and the server system 200. As necessary, each process controller and the server system 200 may communicate directly. Accordingly, process event data generated in the coating device 11, the roll pressing device 12, the slitting device 13, and the winding device 14 may be transmitted to the server system 200.

The server system 200 may generate monitoring data for battery manufacturing. For example, the monitoring data may include process event data, e.g., data measured and/or inspected on the electrode sheet associated with position data, so that a roll map visually displaying the process event data can be generated. Data in the roll map may include data indicating a process event and coordinate values matched or associated with the process event data. The coordinate values may represent positions on electrodes. The server system 200 may transmit a visualization command to the display device 190, and the display device 190 may visualize the roll map and display the visualized roll map (VRM).

The server system 200 may generate and store a roll map of each process (e.g., coating process, roll pressing process, or slitting process).

The roll map may be a type of a simulating electrode that imitates a moving real electrode (e.g., a real electrode moving between an unwinder and a rewinder). In other words, the roll map may be a visual representation of the electrode in which process event data is shown at a specific position corresponding a position of the real electrode where it has been acquired.

Referring to FIG. 1 again, the electrode assembly manufactured by being wound by the winding device 14 may be transferred and accommodated in a case such as a can. A can ID, which is separate can ID information, may be assigned to the can, and the can ID is a type of a battery cell ID. Therefore, historic data for the manufacture of battery cells may be retrieved based on the can ID.

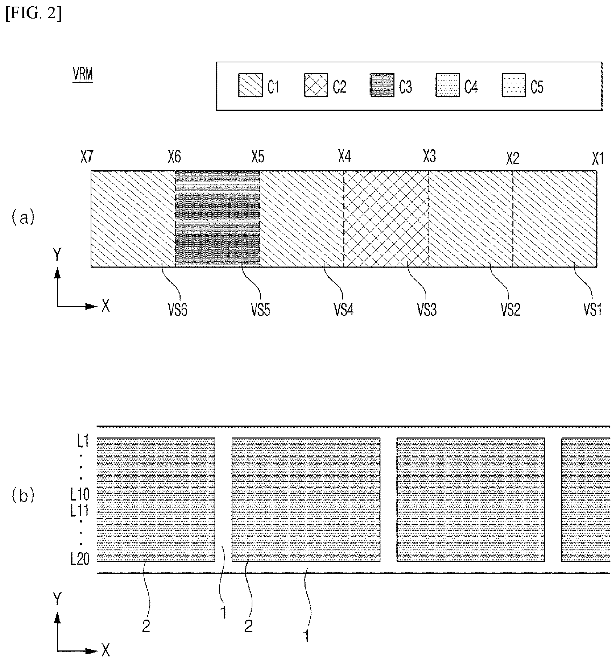

FIG. 2 illustrates a visualized roll map and patterned electrodes.

In FIG 2, arrow X indicates a longitudinal direction (moving direction) of an electrode (roll map), and arrow Y indicates a width direction of the electrode (roll map).

A visualized roll map VRM in FIG. 2A may include a plurality of visualization sections VS1, VS2, VS3, VS4, VS5, and VS6 corresponding to a plurality of sections of an electrode sheet. Each of the plurality of visualization sections VS1, VS2, VS3, VS4, VS5, and VS6 may include start coordinates, end coordinates, and color.

A representative value of coordinate-related measurement data CMD of the visualization sections VS1, VS2, VS4, and VS6 may be displayed in color C1, a representative value of coordinate-related measurement data CMD of the visualization section VS3 may be displayed in color C2, and a representative value of coordinate-related measurement data CMD of the visualization section VS5 may be displayed in color C3.

The color C1 may indicate that the representative value of the visualization sections VS1, VS2, VS4, and VS6 is normal, the color C2 may indicate that the representative value of the visualization section VS3 is excessive, and the color C3 may indicate that the representative value of the visualization section VS3 is very excessive. Color C4 may indicate that a representative value is insufficient, and color C5 may indicate that a representative value is very insufficient.

In this way, since the roll map expresses the position of the electrode in coordinates and can visualize measurement data (e.g., electrode slurry loading amount data) according to each position, the efficiency of electrode production management may be improved using the roll map and the data included therein.

FIG. 2B illustrates a patterned electrode having coating patterns in which coated portions 2 and uncoated portions 1 are repeatedly arranged in the longitudinal direction. Generally, within the meaning of the present disclosure, a patterned electrode includes a plurality of coating patterns, wherein each coating pattern has at least one coated and one uncoated portion. In the example shown in FIG. 2B, multiple coating patterns are arranged neighboring to each other in the longitudinal direction of the electrode, and each coating pattern is formed by one coated portion and one uncoated portion. However, the present invention is not limited to this specific form of coating patterns. In the following, a "coating pattern" may also be referred to simply as "pattern".

The patterned electrode may be slit in a width direction in the uncoated portion 1 between the coated portions 2 in a subsequent process. The slit coated portions 2 may be stacked with coated portions and separators of different polarity so that an electrode assembly is formed, or may be wound together with coated portions and separators of different polarity so that a jelly roll-shaped electrode assembly is formed.

In particular, patterned electrodes used for small batteries may be slit in a width direction and at the same time, slit in a longitudinal direction of the patterned electrode so that a plurality of electrode lanes L1 to L20 are formed.

Unlike a typical electrode which is continuously coated in a longitudinal direction, the patterned electrode has coated portions formed intermittently or spaced to oneanother. Therefore, the roll map method as illustrated in FIG. 2A, which indicates the longitudinal positions of the electrode as length coordinates in succession, may not be suitable for the patterned electrodes. For example, the uncoated portions of the patterned electrode have loading amounts corresponding to measured values of 0, and are not significant portions that affect actual battery performance. Thus, there is no need to display these portions in detail by linking measurement data and coordinates in these portions. Further, the patterned electrodes are made into an electrode assembly according to the length and width of the coated portions 2 forming part of a respective pattern. That is, the electrode production result may be counted as the number of coated portions 2 or the number of patterns including the coated portions 2. In this way, for the patterned electrode, it would be desirable to assign position data according to the characteristics of the patterned electrode on the basis of the pattern. It is one of the ideas of the present invention is to provide a method and a system for monitoring a battery manufacturing process that can generate monitoring data on the basis of pattern identification data, which is position data representing respective patterns on such a patterned electrode. Preferably, the position data are virtually assigned to respective patterns - in other words, without providing corresponding physical identifications to the patterned electrode itself. This apparently can bring about many advantageous effects in the battery manufacturing process, compared to the other case of assigning/providing corresponding physical identifications to the electrode itself.

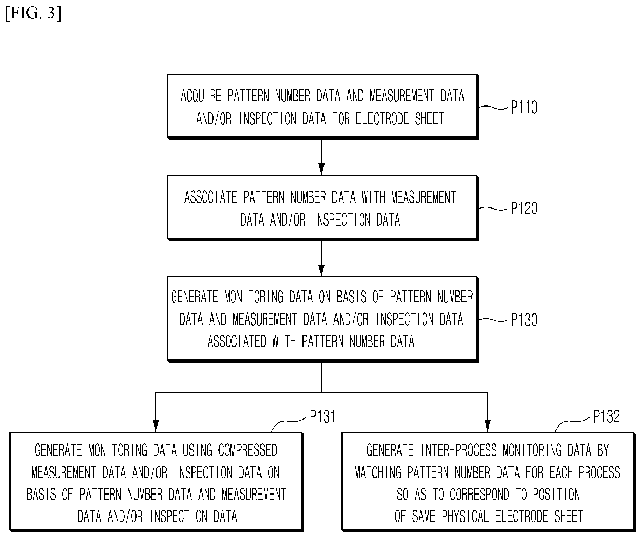

FIG. 3 is a flowchart for describing a monitoring method according to an embodiment of the invention.

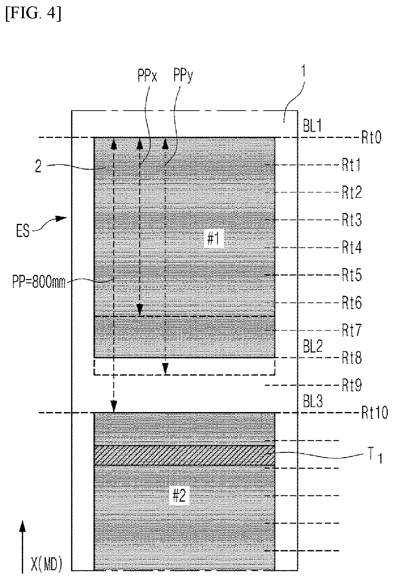

FIG. 4 illustrates a roll map of a patterned electrode in which loading amount measurement data is arranged over time.

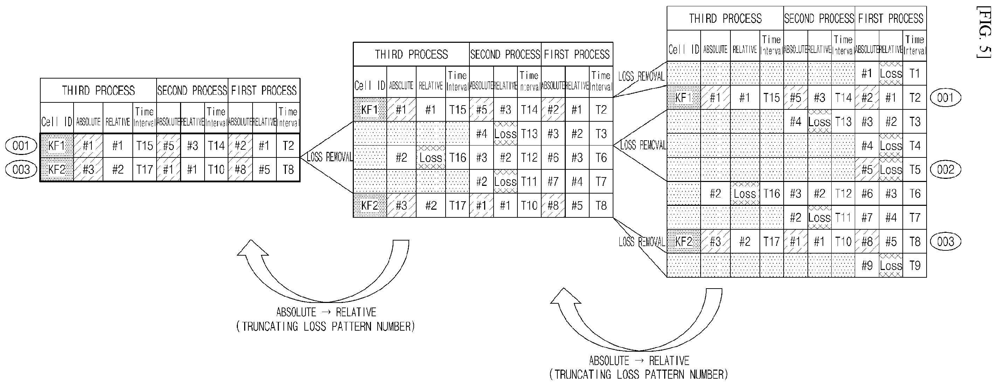

FIG. 5 shows inter-process monitoring data generated by a monitoring method according to an embodiment of the invention.

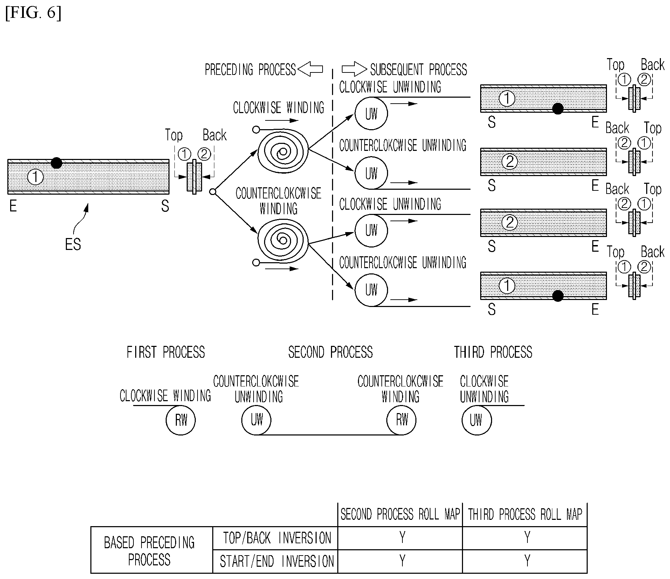

FIG. 6 is a schematic diagram illustrating a case in which a corresponding surface of an electrode sheet is inverted in an unwinding or winding direction of the electrode sheet.

In the following, a method for monitoring a battery manufacturing method process in which a patterned electrode sheet is formed or processed in multiple sub-processes is described. As already discussed above, the patterned electrode sheet includes a plurality of coating patterns, and each coating pattern has at least one coated and one uncoated portion. For example, each coating pattern may include one coated portion and one uncoated portion arranged adjacent or neighboring to each other in a longitudinal direction of the electrode sheet. The battery manufacturing process may include multiple sub-processes, such as coating process, a roll pressing process, a slitting process, a notching process, and so on. In these sub-processes, the electrode sheet, generally speaking, may be physically treated in various ways, so that it can be prepared to be suitable for the subsequent sub-process. To move the electrode sheet in the respective sub-processes, unwinders and rewinders may be employed as already explained above with reference to FIG. 1. Hence, at least some of the sub-processes may include roll-to-roll processes.

As exemplarily shown in FIG. 3, the monitoring method may include a first operation P110 of acquiring pattern identification data while the electrode sheet moves through the battery manufacturing process. The pattern identification data includes pattern identification codes, e.g., in the form of pattern numbers. Each pattern identification code indicates a position of a respective pattern on the electrode sheet.

Additionally, operation P110, may include acquiring measurement data and/or inspection data on the electrode sheet while it moves through the battery manufacturing process. The measurement data and/or inspection data includes a plurality of measurement and/or inspection values for each coating pattern.

As described above, the electrode sheet may move in the longitudinal direction in the plurality of sub-processes (coating process, roll pressing process, slitting process, etc.) for producing or processing a patterned electrode. The electrode sheet may move between an unwinder and a rewinder in each process. In this case, a first electrode roll on which the electrode sheet is wound may be loaded onto the unwinder. The electrode sheet unwound from the unwinder may move after a predetermined processing is performed and be wound around the rewinder to form a second electrode roll. Alternatively, the electrode sheet may move in the longitudinal direction by a conveyor or other driving devices.

As already explained above, one pattern may refer to one coated portion 2 and one uncoated portion 1 consecutively arranged to the coated portion 2. When a pattern identification code is assigned regarding only the coated portion or the uncoated portion as a pattern, the overall state of a patterned electrode cannot be completely expressed. Referring to FIG. 2, uncoated portions 1 are located on both sides of one coated portion 2. Therefore, one pattern may include one coated portion and an uncoated portion at one side of the coated portion, or one coated portion and an uncoated portion at the other side of the coated portion. The pattern identification data may, for example, be acquired by counting the successively arranged individual patterns, and pattern numbers may be acquired as pattern identification codes, so that the pattern number increases or decreases for each counted coating pattern.

The pattern identification data includes pattern identification codes assigned to each pattern. The pattern identification codes, as explained above, may be pattern numbers and may be counted by, for example, a pattern counter. Therefore, the pattern identification data may be acquired by the pattern counter. Each counted pattern number indicates a position of the pattern on the moving electrode sheet. Therefore, the pattern counter may be a position measuring instrument for measuring a position of the patterned electrode. When recognizing a start and an end of a pattern, the pattern counter may count the pattern number of one pattern, i.e., increase or decrease the pattern number. That is, the pattern counter may count the pattern numbers. In the following, the pattern counter may be referred to as a first position measuring instrument or as a first position measuring device. As will be described below, an encoder that measures consecutive positions (coordinates) may be referred to as a second position measuring instrument.

The length of one pattern may vary depending on the type or model of the patterned electrode. The length of a pattern may also be referred to as a pattern pitch in the following. The length of one pattern specified for a specific patterned electrode is referred to as a set pattern pitch or target pattern length. That is, the set pattern pitch may be the sum of a set length of one coated portion and a set length of one uncoated portion.

When the length or pitch of one pattern is different from the set pattern pitch, the pattern may be classified or considered as a pattern with an abnormal pitch, as will be described in further detail below. Optionally, the method may include an operation of comparing the set pattern pitch or target pattern length with an actual or measured length of each pattern to determine a pattern with an abnormal pitch.

The length of each pattern and/or the length of each of the coated portion and uncoated portion included in the pattern may be derived by multiplying differences in detection time points of boundary lines between the coated portions and the uncoated portions included in each pattern by a moving speed of the electrode sheet. For example, the method may include detecting a start boundary line indicating one end of a respective coating pattern, storing a time point or a coordinate value of detecting the start boundary line, detecting an end boundary line indicating an opposite end of the respective coating pattern, and storing a time point or a coordinate value of detecting the end boundary line. The length of a respective pattern, then, may be determined by multiplying a difference between the time points of detecting the start and the end boundary line of the respective coating pattern by a moving speed of the patterned electrode sheet during the detection. When the coordinate values of the start and end boundary line are detected, the length of a respective coating pattern may be determined based on a difference in the coordinate values between the start boundary line and the end boundary line of the respective coating pattern.

The pattern counter may include a pitch sensor and a trigger board. The pitch sensor may measure a length of each pattern, that is, a pitch of each pattern.

For example, the pitch sensor may be a photoelectric sensor or include a photoelectric sensor. The photoelectric sensor may comprise a light emitting unit and a light receiving unit. When light emitted from the light emitting unit is blocked or reflected by an object to be detected, an amount of light reaching the light receiving unit changes. The light receiving unit detects the change, converts the change into an electrical signal, and outputs the electrical signal. The amount of light emitted from the light emitting unit reaching the light receiving unit changes based on a boundary line between the coated portion 2 and the uncoated portion 1 on the patterned electrode. Accordingly, the pattern counter equipped with the pitch sensor may distinguish the coated portion 2 and the uncoated portion 1 on the patterned electrode. An optical fiber sensor may be used as the photoelectric sensor. The optical fiber sensor uses an optical fiber instead of a lens of the photoelectric sensor, and since the optical fiber, which is a detection part, has no electrical parts, there is an advantage of excellent environmental resistance such as noise resistance.

When the pitch sensor, e.g., by its optional photoelectric sensor, detects boundary lines between the coated portions and the uncoated portions, a detection time point at which the respective ethe boundary line is detected may be recorded. Therefore, distances between the boundary lines may be obtained by multiplying the differences (time) in detection time points of the boundary lines between the coated portions and the uncoated portions included in each pattern by, for example, the moving speed of the electrode sheet. The pitch sensor or the pattern counter may include a calculation unit for calculating the time and speed.

A process of finding a pattern with an abnormal pitch using a pattern counter will be described with reference to FIG. 4.

When the electrode sheet moves in a longitudinal direction X (moving direction MD), the pattern counter may detect boundary lines BL1, BL2, and BL3 of a coated portion and an uncoated portion.

In FIG. 4, BL1 denotes a boundary line between a first uncoated portion 1 ahead of a first coated portion 2 in the moving direction MD. BL2 denotes a boundary line between the first coated portion and a second uncoated portion directly following the first coated portion in the moving direction MD. BL3 denotes a boundary line between the second uncoated portion and a second coated portion following the second uncoated portion in the moving direction MD.

The pattern counter, to acquire the pattern identification data, may count a pattern number as the pattern identification code. For example, the pattern counter may increase the pattern number by one when detecting the boundary lines BL1 and BL3 in each pattern.

The pattern counter may obtain a length of the first coated portion by multiplying a difference (time) between a detection time point at which boundary line BL1 is detected and a detection time point at which BL2 is detected by the moving speed of the electrode sheet.

The pattern counter may obtain a length of the second uncoated portion by multiplying a difference (time) between the detection time point at which BL2 is detected and a detection time point at which BL3 is detected by the moving speed of the electrode sheet. The moving speed of the electrode may, for example, be calculated from a rotational speed of a rewinder winding the electrode sheet ES.

The pattern counter may obtain a length (pitch) of a first pattern #1 by multiplying the difference (time) between the detection time point at which BL1 is detected and the detection time point at which BL3 is detected by the moving speed of the electrode sheet. In the same way, the pattern counter may obtain a length of a second pattern #2 and further patterns (not shown in FIG. 4).

Further, a pattern with an abnormal pitch (length) may be determined by comparing the length of the pattern with a set pattern pitch PP. In FIG. 4, PPx denotes a pattern with an abnormal pitch smaller than the set pattern pitch PP. PPy denotes a pattern with an abnormal pitch greater than the set pattern pitch PP. For example, a pattern that has a length deviating from the set pattern pitch by more than a predefined threshold, e.g., by more than 50 %, 30%, 20% or 10% of the set pattern pitch, may be determined as an abnormal pattern. The electrode portion with the abnormal pattern may be removed in a subsequent process.

The pitch sensor may transmit the length of the detected pattern to the trigger board. The trigger board may generate count information for each pattern based on the length of each pattern received from the pitch sensor. That is, the count information may form the pattern identification data, and the trigger board may increase a count value for each length corresponding to the length of a detected pattern. The trigger board may increase a binary coded decimal (BCD) code by 1 whenever the count value for each length of each pattern increases. The trigger board may convert the count value for each length of the generated pattern into a BCD code form and transmit the BCD code form to a controller of each process or a server of the battery manufacturing system. The pattern counter (trigger board) may count the pattern number so that the pattern number increases for each pattern (so-called ascending order). Alternatively, the pattern counter may count the pattern number so that the pattern number decreases for each pattern (so-called descending order). Thus, the patterns are preferably counted in a systematic manner and a pattern number is assigned to each pattern as the pattern identification code so as to be able to specify the position of a respective pattern on the electrode. Thereby, a position on the electrode may easily be found by counting the patterns starting from a known position/pattern.

Electrode specification data ESD may include model information, a recipe, e.g., of the coating material applied to the electrode sheet, and a set pattern pitch of the electrode sheet. The electrode specification data ESD may include all matters related to the processing of the electrode sheet, such as process conditions including the number of lots processed in the current process, the number of coating lanes formed on the electrode sheet, temperature, humidity, and pressure, etc., process parameters including the moving speed of the electrode sheet, the discharge amount of coating die, the pressure of pressing rolls, etc., and the like. The electrode specification data ESD may be stored in the controller of each process or a server system. The pattern counter may download information about the set pattern pitch from the controller or server system and find a pattern with an abnormal pitch.

As already stated above, measurement data and/or inspection data may be acquired for the electrode sheet in operation P110 of the method shown in FIG. 3. The measurement data and/or inspection data may include all kind of data that can be obtained through measurement or inspection of patterned electrodes. The measurement data and the inspection data may be acquired by the measuring instrument and the inspecting instrument that measure and inspect electrodes.

The measurement data may include measurement results expressed in numbers. For example, the measurement data may include dimensional data for electrode sheets such as a thickness and a width, loading amount data for coating materials on electrode sheets, mismatching data between coated portion lanes on a top side of an electrode sheet and coated portion lanes on a back side of the electrode sheet, and the like. As a non-limiting example, the measuring instrument may be either a web gauge or a thickness measuring instrument made by Thermo Fisher Scientific Inc.

The inspection data may include judgments and process events regarding the quality of portions of the electrode sheet. For example, the inspection data may include data for the appearance of electrode sheets collected by an image-based inspecting instrument, such as a vision machine, data for disconnections and seams of electrode sheets, data for a portion of the electrode sheet on which the sampling inspection is performed, data for a portion of the electrode sheet scheduled for scrap, data for reference points indicating the position of the electrode sheet, and defect data such as pinhole defects, crater defects, and line defects, etc. The inspecting instrument may be any one of a color sensor, a seam sensor, a reference point sensor, and a vision machine.

The pattern identification data, the measurement data, the inspection data, and coordinate data which will be described below may be time series data. The pattern identification data includes pattern identification codes, e.g., in the form of pattern numbers, and data regarding a time or time section at which the pattern identification codes are acquired, e.g., the detection time points at which the start and end boundary lines of a respective pattern are detected. Said time points or time section may be matched or associated with the respective pattern identification code, e.g., in the form of a pattern number.

The measurement data and/or inspection data may include measurement values and/or inspection values, and data regarding time points or time section at which the respective measurement values and/or the inspection values are acquired. That is, the measurement data and/or inspection data are acquired as time series data in which each measurement value and/or each inspection value is matched with one time value, respectively. That is, the pattern identification codes, the coordinate values of the coordinate data, the measurement values, and inspection values may be arranged over time. Specifically, the pattern identification codes may be associated with the measurement values and/or inspection values based on the time value commonly matched to them.

Therefore, the pattern identification data, the coordinate data, and the measurement data and/or inspection data may be associated with each other based on the same time or time section at which each piece of data is acquired.

The battery manufacturing method of the present invention includes a second operation P120 of associating the pattern identification data with the measurement data and/or inspection data.

For example, the pattern numbers of the pattern identification data and the measurement values and/or the inspection values may be associated with each other based on the time value commonly matched to them, as described above.

In FIG. 4, loading amounts Rt0 to Rt10 of the coating materials measured at each of measurement time points t0 to t10 are exemplarily shown.

The boundary line BL1 between the coated portion and the uncoated portion is detected, for example, by the pattern counter, at a time point t0, the boundary line BL2 at a time point t8, and the boundary line BL3 at a time point t10,. The loading amounts measured at the times t0, t8, and t10 are Rt0, Rt8, and Rt10, respectively. Loading amount measurement times of a pattern of pattern number #1 are t0, t1, t2, t3, t4, t5, t6, t7, t8, t9, and t10. Loading amount measurement values that correspond to the pattern of pattern number #1 and correspond to the times are Rt0, Rt1, Rt2, Rt3, Rt4, Rt5, Rt6, Rt7, Rt8, Rt9, and Rt10.

Further, the loading amounts Rt0 to Rt8 measured in sections between the times t0 to t8 are the measurement values associated with the coated portion between the boundary lines BL1 and BL2. Further, the loading amounts Rt8, Rt9, and Rt10 measured in sections between the times t8 to t10 are the measurement values associated with the uncoated portion between the boundary lines BL2 and BL3.

Therefore, based on the times values t0 to t10 commonly matched to the pattern identified by pattern number #1 and the loading amounts Rt0 to Rt10, pattern identification data in the form of pattern number #1 may be associated with the loading amounts Rt0 to Rt10.

Further, in the example of FIG. 4, starting and ending points of connecting tape T₁ located on the coated portion of the pattern identified by pattern number #2 may be detected by the seam sensor. Seam measurement data includes a seam measurement signal and a starting point measurement time and an ending point measurement time. In this case, the seam measurement data may be associated with pattern number #2, which shares time values with the starting and ending detection time points at which the connecting tape T₁ is detected.

As described above, the pattern counter may obtain a length of each pattern and lengths of the coated portion and the uncoated portion belonging to each pattern by multiplying differences in time points at which the boundary lines are detected between the coated portion and the uncoated portion by the moving speed of the electrode sheet. By the same principle, when there is an appropriate computational tool, the computational tool may obtain the length of the coated or uncoated portion corresponding to each measurement section by multiplying the differences (time) in times at which the measurement values are obtained by the moving speed of the electrode sheet. The computational tool may be provided in, for example, a pattern counter, a process controller, a measuring instrument, or an inspecting instrument.

Associating the pattern identification data with the measurement data and/or inspection data may be performed in a controller controlling sub-process in which the electrode sheet is processed. In this case, the measurement data and/or inspection data acquired by the measuring instrument and/or inspecting instrument may be transmitted to the respective controller, and the pattern identification data acquired by the pattern counter may also be transmitted to the controller. The controller may associate the measurement data and/or inspection data acquired at the same time points or time section with the pattern identification codes, i.e., the pattern numbers included in the pattern identification data.

Alternatively, associating the pattern identification data and the measurement data and/or inspection data may be performed in the measuring instrument and/or inspecting instrument. In this case, the pattern identification data acquired by the pattern counter may be transmitted to the measuring instrument and/or inspecting instrument directly or through the controller. The measuring instrument and/or inspecting instrument may associate the measurement data and/or inspection data acquired at the same time or time section with the pattern numbers of the pattern identification data.

By associating the measurement data and/or inspection data with the pattern identification data in operation P120, monitoring data is generated.

As further shown in FIG. 3, the monitoring method includes an operation P130 of further processing the monitoring data. As exemplarily shown in FIG. 3, this may include operation P131 and/or operation P132.

As described above, by assigning the pattern identification codes to the individual patterns of the patterned electrode, the position of the patterns on the patterned electrode may be easily specified. As a result, a production result of the patterned electrode may be easily determined. Further, by associating the measurement data and/or inspection data acquired for the pattern electrode with the pattern identification data, it is possible to easily determine a state of each pattern. For example, it may be possible to determine whether the electrode is broken or has another defect in a respective pattern. The monitoring data may be used to generate a roll map of the electrode manufacturing process. As illustrated in FIG. 4, the roll map for the patterned electrode essentially includes the pattern identification data including the pattern identification codes, here in the form of pattern numbers, and the measurement data or the inspection data associated with the pattern identification codes. The measurement data and/or inspection data are a type of process event data that may be generated in each sub-process of the battery manufacturing process. The roll map may be cumulatively generated for work pieces, parts, semi-finished products, and products of unit processes, thereby enabling tracking of process history for shipped products (e.g., battery cells, battery modules, or battery packs).

Processing of the monitoring data may include at least one of the following operations:
i) an operation P131 of generating, based on the monitoring data, processed monitoring data with compressed measurement data and/or inspection data, by reducing the amount of measurement and/or inspection values associated with the pattern identification data;
ii) an operation P132 of generating inter-process monitoring data by matching the monitoring data generated for respective sub-processes such that pattern identification data of one sub-process and pattern identification date of another sub-process are matched with each other, insofar as they are acquired from an identical physical part of the electrode sheet.

As illustrated in FIG. 4, a plurality of measurement values may be assigned for one pattern. In the example of FIG. 4, ten measurement values are associated per pattern. Depending on the type of measuring instrument or inspecting instrument, a large number of measurement values and/or inspection values may be associated with a respective pattern identification code. In this way, when the size of measurement data and/or inspection data increases, high computational load is applied, for example, to a server system for generating the monitoring data. This may slow down data processing speed. In operation P131, the measurement data and/or inspection data may be compressed to reduce data size and increase a data processing speed.

For example, a processing unit provided in the measuring instrument and/or inspecting instrument may be configured to generate the compressed measurement data and/or inspection data on the basis of the pattern identification data and the measurement data and/or inspection data. The compressed measurement data and/or inspection data has a smaller size than the measurement data and/or inspection data associated with the pattern identification data. The resources of the server for generating the monitoring data may be reduced due to the compressed measurement data and/or inspection data.

The measurement data and/or inspection data may be compressed by reducing the amount of measurement and/or inspection values associated with the pattern identification data. In other words, the number of data sets associated with one pattern identification code may be reduced. This may be done, for example, by selecting, for a respective coating pattern represented a specific pattern identification code, a subset of the plurality of measurement and/or inspection values associated with the respective coating pattern. For example, only a maximum value and a minimum value of the respective pattern may be selected from all values associated with the respective pattern identification code. Further, the plurality of measurement and/or inspection values associated with the respective coating pattern identification code are replaced by the selected subset of measurement and/or inspection values. It should be noted that it may also be possible to reducing the amount of measurement and/or inspection values associated with the pattern identification data for not only one pattern but for a group of patterns. **In** this case, a subset of the plurality of measurement and/or inspection values associated with the group of coating patterns is selected, and the measurement and/or inspection data associated with this group of patterns is replaced by the selected subset of data.

Additionally, or alternatively, reducing the amount of measurement and/or inspection values associated with the pattern identification data may include determining a representative measurement and/or inspection value based on the plurality of measurement and/or inspection values associated with a respective coating pattern or group of coating patterns respectively represented by the pattern identification data. The representative value may include, for example, at least one of an average, a standard deviation, a median, a maximum value, and a minimum value of the measurement data and/or inspection data associated with the respective pattern or group of patterns. The plurality of measurement and/or inspection values associated with the respective coating pattern or group of coating patterns may then be replaced by the representative measurement and/or inspection value.

The compressed measurement data and/or inspection data may include a representative value of the measurement values and/or inspection values of the measurement data and/or inspection data, and pattern identification data for starting and ending points of a portion of the electrode sheet in which the measurement data and/or inspection data are collected. The compressed measurement data may further include a time stamp indicating the collection date and time of the measurement data and/or inspection data for each pattern or plurality of patterns, a measuring instrument and/or inspecting instrument ID, and a facility ID.

For example, the processing unit of the measuring instrument and/or inspecting instrument may calculate a representative value of the measurement data and/or inspection data or select the subset of the plurality of measurement and/or inspection values for each pattern of the electrode sheet. As stated above, the representative value may include at least one of an average, a standard deviation, a median, a maximum value, and a minimum value of the measurement data and/or inspection data of each pattern.

For example, when loading amount data corresponding to pattern number #1 has ten measurement values corresponding to one scanning of the loading amount measuring instrument, the compressed measurement data may include a single representative value calculated based on the ten measurement values. Accordingly, the size of the compressed measurement data may be smaller than the size of the measurement data associated with the pattern identification data. As also explained above, the representative value may be calculated for a plurality of patterns instead of only for one pattern. That is, a single representative value may be acquired by grouping the plurality of patterns into groups and compressing the measurement data and/or inspection data acquired for each group. In this case, among the measurement values included in each pattern, the measurement values less than a certain value may be regarded as, for example, values measured in the uncoated portion of the corresponding pattern and excluded when calculating the representative value. That is, the representative value may be calculated only from the measurement values included in each pattern that are greater than or equal to the certain threshold value.

In this case, the pattern identification codes, e.g., in the form of pattern numbers, representing the starting and ending points of any pattern of the electrode sheet from which the measurement data and/or inspection data are collected may be determined by using the pattern identification data. Alternatively, the pattern identification codes, e.g., in the form of pattern numbers, representing the starting and ending points of a portion of the electrode sheet corresponding to the plurality of grouped patterns may be determined. The pattern identification codes, e.g., in the form of pattern numbers, representing the starting and ending points of the compressed measurement data and/or inspection data are substantially the same as the pattern identification codes representing the starting and ending points of the measurement data and/or inspection data associated with the pattern identification data.

The measurement data and/or inspection data may be processed according to a set method. For example, quality indicator values for each pattern or plurality of patterns of the electrode sheet may be determined. For example, when the measurement amount of coating materials on the electrode sheet (e.g., loading amount on the electrode sheet or thickness of the electrode sheet) is within a set range including upper and lower limits, the corresponding portion of the electrode sheet may be determined to fulfil predefined quality criteria. When the measurement amount is smaller than the lower limit or greater than the upper limit, the corresponding portion of the electrode sheet may be determined to be defective.

The processing unit of the respective measurement and/or inspection instrument may be configured to transmit the compressed measurement data and/or inspection data to the server system directly or through the process controller.

The server system or a server (e.g., manufacturing execution system (MES)) included in the server system may generate a roll map based on the processed monitoring data including the compressed measurement data and/or inspection data associated with the pattern identification data. In addition to generating the roll map, the MES may perform various tasks to manage battery production. Therefore, when the roll map is generated based on the processed monitoring data with the compressed measurement data and/or inspection data, the resources of the MES allocated to generating and storing the roll map may be advantageously reduced.

FIG. 5 exemplarily shows inter-process monitoring data generated by the method.

FIG. 6 is a schematic diagram illustrating a case in which a corresponding surface of an electrode sheet is inverted in an unwinding or winding direction of the electrode sheet.

A roll map for each process may be generated based on the generated monitoring data or processed monitoring data with the compressed measurement and/or inspection data. In both cases pattern identification data for each process and measurement data and/or inspection data for each process are associated with each other. As illustrated in FIG. 1, the roll map may be generated for each of a plurality of sub-processes of the battery manufacturing process. For example, when a first sub-process (coating process), a second sub-process (roll pressing process), and a third sub-process (slitting process) are performed sequentially, a roll map may be generated for each process. The roll map may be present not only in a form that replicates the electrode sheet as illustrated in FIG. 2A, but also in various forms that can visually display data in association with a position on the electrode sheet, such as graphs and diagrams.

As described above, the electrode sheet goes through a plurality of sub-process, e.g., in the form of roll-to-roll processes, and the roll map may be generated for each sub-process, e.g., each roll-to-roll process.

However, due to the characteristics of the roll-to-roll process, an end portion of the electrode sheet wound in the first process (preceding process, for example, coating process) becomes a start portion when it is unwound in the second process (subsequent process, for example, roll pressing process). That is, the start and end portions of the electrode sheet are inverted between the processes, in particular, the start and end portions are inverted in the following sub-process compared to the preceding sub-process. For this reason, the pattern identification data acquired in each sub-process is also inverted between the processes.

Further, the electrode sheet goes through a plurality of sub-processes and parts of the electrode sheet may be removed during each process and/or between the sub-processes. Depending on the loss of the electrode sheet, the respective position of the electrode sheet corresponding to the pattern identification data acquired in each sub-process may vary.

Further, depending on a winding direction or an unwinding direction of the electrode sheet, a corresponding surface of the electrode sheet may be inverted between the sub-processes. For example, a top side of the electrode sheet in the first process (preceding process, for example, coating process) may be inverted to a back side in the second process (subsequent process, for example, roll pressing process).

Due to the start-to-end inversion, occurrence of electrode sheet loss or removal, and electrode sheet surface inversion, the pattern identification data corresponding to a position of the same electrode sheet may become inconsistent between the plurality of processes. In this case, even when the roll map is generated from the monitoring data for each process, it is difficult to compare the roll maps of each process in the same dimension, making it difficult to track the cause of problems occurring in the electrode sheet.

In view of the above, processing the monitoring data may include the operation P132 of generating the inter-process monitoring data by matching the pattern identification data of each sub-process insofar as they are acquired from an identical physical part of the electrode sheet.

FIG. 5 shows the process of generating the inter-process monitoring data by matching each set of pattern identification data of the first to third sub-processes, reflecting the start-to-end inversion of the electrode and electrode loss or removal.

In FIG. 5, in addition to the pattern identification data, a time section in which the corresponding pattern identification data is acquired is also shown.

FIG. 5 exemplarily shows date on an electrode sheet on which pattern identification codes in the form of pattern numbers #1 to #9 are acquired in a first sub-process. As shown in FIG. 5, the pattern numbers #1 to #9 acquired in the first sub-process are arranged in inverted order in the second sub-process. Further, the pattern numbers in the second sub-process are arranged in inverted order in the third sub-process. Since the positions of the start and end portions of the electrode sheet are inverted between the respective sub-processes, in order to compare the data of each process at the position of the same physical electrode sheet, it is necessary to match the inverted pattern identification data as shown in FIG. 5.

Further, FIG. 5 shows the portions removed in each process. When the pattern identification data is shown including the portion removed in each sub-process, it is indicated as "absolute", and when the pattern identification data is shown excluding the removed portion, it is indicated as "relative". When the pattern identification data is regarded as types of coordinates indicating a position on the electrode sheet, "absolute" may be seen as "absolute coordinates" and "relative" may be seen as "relative coordinates". In the electrode sheet, processing may be performed to remove portions that are defective during each sub-process, broken, etc., or to remove portions of uneven quality between the processes. In FIG. 5, in consideration of the loss of the electrode sheet that occurs during a respective sub-process and/or between the sub-processes, matching between the sub-processes is performed with the pattern identification data.

In the example of FIG. 5, in the first sub-process, only pattern numbers #2, #3, #6, #7, and #8 among "absolute pattern identification data" #1 to #9 remain in consideration of the loss that occurs during the first sub-process. When this data is corrected with "relative pattern identification data", it becomes #1 to #5. That is, "absolute pattern number" #2 in the first process corresponds to "relative pattern number" #1. These pattern numbers are acquired at the same time section T2. In this way, by reflecting the loss in each process and considering the inversion of the start and end portions between the processes, the pattern identification data acquired from the same physical part of the electrode sheet may be matched in each process.

Cell IDs KF1 and KF2 may be assigned to battery cells manufactured from the surviving electrodes that are finally remaining through the first to third processes. In this case, pattern identification data for each process corresponding to each cell ID is the same as shown in the leftmost diagram of FIG. 5.

Further, the pattern identification data for each sub-process is associated with the measurement data and/or inspection data, as illustrated in FIG. 4. Therefore, by selecting a specific pattern identification code, e.g., in the form of a pattern number, with reference to a roll map or data included in the roll map, measurement data and/or inspection data corresponding to the pattern identification code may be identified. For example, in FIG. 5, the measurement data and/or inspection data for each process associated with the pattern numbers corresponding to the cell IDs KF1 and KF2 may be intuitively identified.

FIG. 6 shows that a surface of an electrode sheet is inverted between the subsequent sub-processes depending on a winding direction or an unwinding direction of the electrode sheet.

In FIG. 6, an electrode sheet ES is a double-sided electrode sheet provided with coating materials on both surfaces.

A start portion of the electrode sheet is indicated by S and an end portion is indicated by E. A top side of the electrode sheet is marked as ① and a back side as ②, and a black dot is marked on the top side ① for comparison. There are four cases in which an electrode roll manufactured by being wound by a rewinder in a preceding sub-process is unwound by an unwinder in a subsequent sub-process. In all four cases, an inversion occurs in which the start and end portions of the electrode sheet are inverted between the preceding sub-process and subsequent sub-process.

For example, when a winding direction of the rewinder in the preceding sub-sub-process is an upward direction or first winding direction (clockwise winding) and an unwinding direction of the unwinder in the subsequent sub-process is an upward direction or first direction (clockwise unwinding), too, the start portion S and the end portion E are inverted. In this case, the top side ① and the back side ② of the electrode sheet ES are not inverted.

When the winding direction of the rewinder in the preceding sub-process is an upward direction or first direction and the unwinding direction of the unwinder in the subsequent sub-process is a downward direction or second direction (counterclockwise unwinding) opposite to the first direction, inversion of the top side ① and the back side ② of the electrode sheet also occurs simultaneously with the inversion of the start and end portions of the electrode sheet ES.

When the winding direction of the rewinder in the preceding sub-process is a downward direction or second direction (counterclockwise unwinding) and the unwinding direction of the unwinder in the subsequent sub-process is an upward direction or first direction, the inversion of the top side ① and the back side ② of the electrode sheet also occur simultaneously with the inversion of the start and end portions of the electrode sheet ES.

When the winding direction of the rewinder in the preceding sub-process is a downward direction or second direction and the unwinding direction of the unwinder in the subsequent sub-process is a downward direction or second direction, only the inversion of the start and end portions of the electrode sheet occurs.

The bottom in FIG. 6 shows whether start-to-end inversion and surface inversion occur depending on the winding direction or the unwinding direction when going through the first sub-process, the second sub-process, and the third sub-process.

As shown in FIG. 5, even when the pattern identification data is matched according to the start-to-end inversion of the electrode and electrode loss, when the surface inversion occurs as shown in FIG. 6, the pattern identification data for each sub-process may not be matched so as to correspond to the position of the same physical electrode sheet.

In this case, for example, the server of the server system may assign a control logic of 0 or 1, record whether the surface is inverted, and match the surfaces of the electrode sheets with each other between the preceding and subsequent processes. That is, when surface inversion does not occur in FIG. 6, a control logic of 0 may be assigned. In this case, since surface inversion did not occur, the pattern identification data in the preceding and subsequent processes may be matched through the corresponding operation as shown in FIG. 5.

When surface inversion occurs, a control logic of 1 may be assigned. In this case, the server may assign the pattern identification data for each process on the basis of the control logic so that the absolute and relative pattern identification data regarding the top side of the first process are matched with the absolute and relative pattern identification data regarding the back side of the second process.

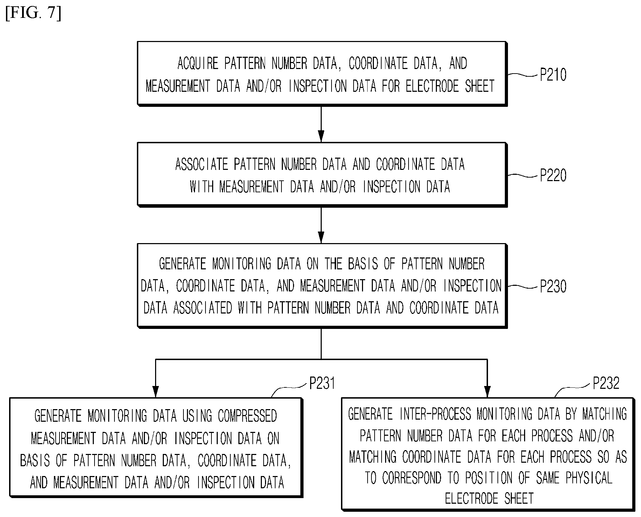

FIG. 7 is a flowchart for describing a further method.

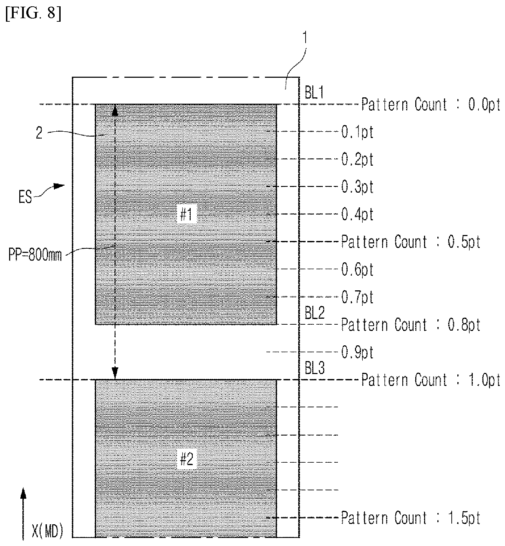

FIG. 8 illustrates a roll map of a patterned electrode on which pattern identification codes in the form of pattern numbers and sub-pattern numbers are displayed.

The battery manufacturing method of the present invention includes, in addition to acquiring pattern identification data and measurement data and/or inspection data for an electrode sheet when the electrode sheet moves in a plurality of sub-processes, an operation P210 of acquiring coordinate data that can indicate longitudinal positions on the electrode sheet. For example, coordinate data may include coordinate values each indicating a longitudinal position on the electrode sheet. Optionally, a start portion, i.e., a first end of the electrode sheet, may correspond to coordinate value zero, and the coordinate values may continuously increase with increasing distance from the first end, in particular, in predetermined intervals. For example, the coordinate values may be measured in meters and increased in steps of millimeters. However, the invention is not limited to this example.

In order to calculate a length (pitch) of a pattern or a length of a section in which the measurement data and/or inspection data are acquired, methods that use a moving speed of the electrode sheet or a time difference may require additional computational tools. Further, since the moving speed of the electrode sheet is not always constant, a time point at which specific data is measured on the electrode sheet and a position of the electrode sheet at that time point may not be matched accurately. Further, the moving speed of the electrode sheet varies depending on the standard of the electrode sheet, a type of a model, a type of a processing process, a driving mechanism of a processing device, etc. In this way, a method of indirectly determining a position of the electrode sheet or a distance using varying movement speed and time difference may delay data processing speed and increase manufacturing costs.

Additionally, or alternatively to the aforementioned method of indirectly determining a position of the electrode sheet or a distance using varying movement speed and time difference, pattern identification data and coordinate data may be used together to indicate and/or display the longitudinal position of the electrode sheet. For example, pattern identification data containing pattern identification codes, e.g., in the form of pattern numbers, indicating the positions on the electrode sheet may be acquired as main position data, and at the same time, coordinate data containing coordinate values that can indicate the longitudinal positions may be further acquired. The coordinate values and differences between the coordinate values directly indicate the position of the electrode sheet or a distance between specific points. Therefore, by acquiring the coordinate data, it is possible to acquire position information about the electrode sheet more accurately without performing the additional calculations described above and by excluding the influence of the moving speed of the electrode sheet. By associating the coordinate data with the pattern identification data, with the measurement data and/or inspection data, or with the measurement data and/or inspection data associated with the pattern identification data, state information about the electrode sheet may be acquired more accurately and reliably.

A first position measuring instrument (pattern counter) may be used to acquire the pattern identification data. A second position measuring instrument may be additionally used to acquire the coordinate data. The second position measuring instrument may include at least one rotary encoder that is configured to generate a position signal of the electrode sheet moving according to the rotation amount of the unwinder or rewinder as an encoder value. Alternatively, the second position measuring instrument may be a linear encoder that is configured to generate a position signal corresponding to the moving displacement of the electrode sheet as an encoder value. The encoders may be configured in contact or non-contact with the electrode sheet. The second position measuring instrument may be equipped with a calculation unit to convert the encoder value into the coordinate value. Alternatively, the process controller may receive the encoder value and convert the encoder value into the coordinate value through a predetermined operation. In consideration of the computational load on the process controller, the encoders may directly convert the encoder value into the coordinate value.

By comparing the set pattern pitch or target pattern length with the coordinate data, sub-position codes, e.g., in the form of sub-pattern numbers, obtained by further subdividing the pattern number may be calculated.

FIG. 8 exemplarily and schematically shows a patterned electrode sheet ES having patterns that moves in a longitudinal direction X, which is a moving direction MD.

The first position measuring instrument, which may be a pattern counter, may detect boundary lines BL1, BL2, and BL3 of coated portions 2 and uncoated portions 1 and acquire pattern numbers or other pattern identification codes as part of the pattern identification data, as described above in connection with FIG. 4. The second position measuring instrument, which may be a rotary encoder, may acquire coordinate data in the form of coordinate values on the basis of the encoder values. The coordinate values of the boundary lines BL1, BL2, and BL3, which indicate a longitudinal position of each of pattern #1 and #2, may be determined as those coordinate values being acquired at the same time point at which the first position measuring instrument detects the boundary lines BL1, BL2, BL3, for example.

In the example of FIG. 8, the set pattern pitch PP or target pattern length is 800 mm and is divided into ten equal parts, and the pattern number may be displayed in decimal units. For example, when the electrode sheet moves by 80 mm and the controller receives the coordinate value corresponding to 80 mm, the controller may count a pattern number of 0.1pt at a position corresponding to the coordinate value of 80 mm. Until the electrode sheet moves by 800 mm and the first position measuring instrument detects the boundary line BL3 of the coated portion of pattern number #2, the controller may count the sub-pattern number from 0.1pt to 1.0pt to correspond to the coordinate value of each point. That is, generally, a length interval is determined by dividing the target pattern length by an integer number greater than one, pattern sub-position codes, e.g., in the form of sub-pattern numbers, representing a position within a respective coating pattern are obtained by dividing the coordinate values by the length interval and assigning one sub-position code to each coordinate value corresponding to an integer multiple of the length interval. Thereby, the coordinate values can be expressed as values related to the target pattern length.

As described above, by comparing the set pattern pitch with the coordinate data to calculate the pattern sub-position codes, the identification codes may be displayed in more detail, e.g., in a further sub-divided fashion. Accordingly, a pattern with an abnormal pitch may be more easily determined.

By comparing the set pattern pitch with the length of each pattern, a pattern with an abnormal pitch may be determined.

In this case, the length of each pattern and/or the lengths of the coated portion and the uncoated portion included in the pattern may be determined based on a difference in coordinate values between start and end boundary lines of each pattern, a difference in coordinate values between start and end boundary lines of the coated portion, and a difference in coordinate values between start and end boundary lines of the uncoated portion. In this case, since the coordinate values directly indicate the positions of the respective boundaries, the lengths of the respective coated and uncoated portions may be easily determined and compared with the pattern pitch. In particular, the length (pitch) of the pattern may be intuitively obtained without a separate time based calculation relying on the moving speed of the electrode sheet. Therefore, it is possible to identify patterns deviating from the set pattern pitch more rapidly.

The monitoring method as shown in FIG. 7 may further include an operation P220 of generating monitoring data by associating the pattern identification data, the coordinate data and the measurement data and/or inspection data with each other.

As described with respect to the first example, the pattern identification data and the measurement data and/or inspection data may be associated with each other based on the time points at which they are acquired, respectively. In addition, the coordinate data may be associated with at least one of the following:
i) the pattern identification data;
ii) the measurement data and/or inspection data; and
iii) the time or the time section at which the pattern identification data and the measurement data and/or inspection data are acquired.

That is, also the coordinate data may be acquired as time series data, and the coordinate values of the coordinate data may be associated with the pattern identification codes of the pattern identification data and the measurement and/or inspection values of measurement data and/or inspection data based on the time values commonly matched to them.

As further shown in FIG. 7, the monitoring method of the may further includes an operation P230 of processing the monitoring data generated in operation P220. As visible in FIG. 7, operation P230 may include operation P231 and/or operation P232 which will be described in more detail below.

A roll map may be generated using the monitoring data which includes the coordinate data.

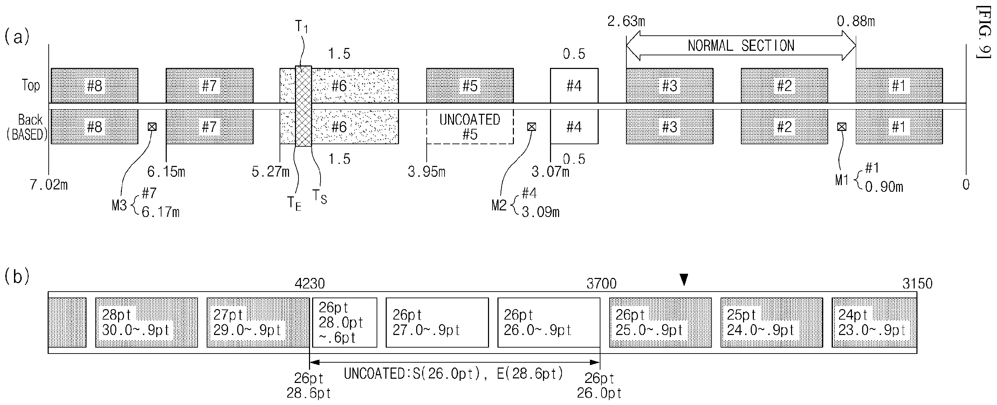

FIG. 9 shows an example of a roll map in which pattern identification data and coordinate data are displayed on a patterned electrode.

FIG. 9A shows a roll map of a double-sided electrode simulating a coating state of a physical patterned electrode. A portion other than a coated portion on an electrode sheet is an uncoated portion.

In the present example, FIG. 9A shows a representation of an electrode extending between a first end, indicated by coordinate value "0", and a second end, indicted by coordinate value 7.02m. A first uncoated portion next to the first end and a coated portion adjacent thereto may be combined to form a pattern which is identified by the pattern identification code formed by pattern number #1. Alternatively, the first coated portion next to the first end and an uncoated portion adjacent thereto in the direction of the second end may be combined to form a pattern identified by the pattern identification code formed by pattern number #1. A first position measuring instrument sequentially detects boundary lines between the uncoated portions and the coated portions, detects the respective patterns, and acquires pattern identification data of the detected patterns, e.g., in the form of pattern numbers #1 to #8. Coordinate data (expressed in m units) acquired by a second position measuring instrument is displayed on the roll map. To avoid data overload, the coordinate data may be displayed only on major portions of the roll map.

The roll map may be generated not only for a single-sided electrode with coated portions formed on only one side of the electrode sheet, but also for a double-sided electrode with coated portions formed on both sides of the electrode sheet as shown FIG. 9A. In order to prevent excessive growth of roll map data, only major event information may be collected and transmitted to the server. The server may generate a roll map for the double-sided electrode based on the major event information. When performance and/or quality tracking is required for both of the upper and lower surface patterns, the amount of data to be considered increases. Therefore, it may be possible to carry out performance and/or quality tracking based only the patterns of one of the upper and lower surface. In the example discussed with reference to FIG. 9B, only the patterns on the lower surface or back side are monitored. However, the invention is not limited in this regard.

When a set pattern pitch or target pattern length is set to a predefined value, for example, to 878 mm, a pattern with an abnormal pitch may be displayed by comparing the set pattern pitch with the coordinate data associated with the pattern identification data acquired by the first position measuring instrument and the coordinate data acquired by the second position measuring instrument. FIG. 9 exemplarily shows a normal section coated according to the set pattern pitch. However, on the back side of the electrode sheet, an under-length pattern is measured and displayed at pattern number #4, an uncoated section is measured at pattern number #5, and an excessive-length pattern is measured and displayed at pattern number #6. For example, a pattern that has a length of 0.5 times or less than the set pattern pitch or that has a length of 1.5 times or more than the set pattern pitch may be regarded as a defective pattern.

When an uncoated section not included in the pattern is present between neighboring patterns, pattern identification codes, e.g., in the form of pattern numbers, may be assigned to uncoated sections equal to the number of patterns obtained by dividing the length of the uncoated section by the set pattern pitch. Generally, if an uncoated gap section with a length greater than the target pattern length is detected between neighboring coating patterns, a corresponding pattern identification code may be assigned to the gap section by detecting the length of the gap section, determining a number of target pattern lengths fitting into the length of the gap section, and assigning to the gap section one or more pattern identification codes corresponding to the determined number of target pattern lengths. In the example of FIG. 9, on the back side of the electrode sheet, pattern number #5 is assigned as pattern identification code to an uncoated section between patterns identified by pattern numbers #4 and #6. When the pattern identification code is not assigned to the uncoated section, there will be a gap in the roll map information and the state of the electrode sheet cannot be completely expressed which may lead to errors. Therefore, it is advantageous to assign pattern identification codes to the uncoated sections not included in a pattern, so that a roll map generated from the monitoring data reflects information about uncoated sections of the electrode sheet together with information about the pattern(s) with an abnormal pitch that is different from the set pattern pitch. The information about the uncoated section may include the pattern identification codes, e.g., in the form of pattern numbers, assigned to the uncoated section corresponding to the number of patterns obtained by dividing the length of the uncoated section by the set pattern pitch.

As further exemplarily shown in FIG. 9, information about reference points and seams may also be included in the monitoring data and reflected in the roll map.

Reference points M1, M2, and M3 are marked on the electrode sheet at predetermined intervals. Actual positions of the reference points may be measured, and the positions of the reference point and the intervals may be displayed on the roll map. When the intervals between the reference points deviates from a predefined interval, changes in electrode length that occur during the respective sub-process or before and after the respective sub-process may be identified. Displaying in the roll map a connecting tape, which is a seam, means that the electrode sheet is broken for some reason and is connected by the connecting tape T₁. The position of the connecting tape T₁ may be determined by acquiring coordinate values or pattern identification data regarding a start boundary line Ts and an end boundary line Te of the connecting tape. From this information, it is possible to determine the history of changes more accurately in the state of the physical electrode sheet that has been subject to a plurality of sub-processes.

In FIG. 9A, three reference points M1, M2, and M3 are exemplarily displayed and pattern numbers and coordinate values for each reference point are shown. The reference points may be measured by a reference point measuring instrument, and the seams may be measured by a seam sensor.

FIG. 9B exemplarily and schematically shows a roll map in which pattern identification data and coordinate data are displayed between a coated section and an uncoated section.

In FIG. 9B, the pattern identification data includes pattern numbers as pattern identification codes, and the pattern numbers are displayed in sub-pattern number units.

Further, the coordinate values are displayed at predefined points.

In the example of FIG. 9B, the roll map reflects an uncoated section, and a sub-pattern number is displayed for the uncoated section in comparison with the set pattern pitch. The uncoated section includes an uncoated portion with a length corresponding to two set pattern pitches and an uncoated portion with a length corresponding to 0.6 times (0.6 pt) the set pattern pitch.

Meanwhile, only information about performance excluding the uncoated section may be collected and transmitted to the process controller. The controller may be a process controller that controls the respective sub-process, e.g., by controlling movement of the electrode sheet. The controller may determine and record performance indicators on the respective sub-process. For example, a number of coated sections on the electrode may be determined and recorded as a performance indicator. Among the pattern numbers in FIG. 9B, only those that are not sub-pattern numbers (numbers not expressed in decimal units: for example, 24pt) are pattern numbers relevant for indicating performance. For example, in the uncoated section, the pattern number may remain unchanged at 26pt, and at the point where the uncoated section ends, the pattern number becomes 27pt, increasing the pattern number by one.

In this way, the pattern identification data and the coordinate data may be freely displayed, and furthermore, the pattern numbers that are taken into account to determine a performance indicator and pattern numbers that are not taken into account to determine a performance indicator may be displayed separately.

Therefore, monitoring data and a roll map data that reflect the state of the physical patterned electrode may be generated, and the actual physical state of the electrode may be represented by the data in a significantly improved way.

Referring to FIG. 7 again, the processing the monitoring data may include at least one of the following operations:
i) an operation P231 of generating based on the monitoring data, processed monitoring data with compressed measurement data and/or inspection data, by reducing the amount of measurement and/or inspection values associated with the pattern identification data and the coordinate data;
ii) an operation P232 of generating inter-process monitoring data by matching the monitoring data generated for respective sub-processes such that pattern identification data of one sub-process and pattern identification date of another sub-process are matched with each other, insofar as they are acquired from an identical physical part of the electrode sheet.

Similar as explained above with reference to FIG. 3, according to the method shown in FIG. 7, the measurement data and/or inspection data may be compressed. However, since the monitoring data in the method of FIG. 7 is generated by associating the measurement and/or inspection values with the pattern identification data and the coordinate data, data reduction or compression is done based on the coordinate data in addition to the pattern identification data. That is, a representative value may be calculated by compressing a plurality of measurement values measured for one pattern or a plurality of patterns. In this case, the coordinate data having coordinate values corresponding to the one pattern or plurality of patterns may also be included in the compressed or processed monitoring data.

For example, a processing unit provided in the measuring instrument and/or inspecting instrument may be configured to generate the processed monitoring data.

Compressed measurement data and/or inspection data which is used to generate the processed monitoring data may include a representative value of measurement values and/or inspection values of the measurement data and/or inspection data and/or a subset of the plurality of measurement and/or inspection values associated with the respective coating pattern or group of coating patterns, as already explained in detail above. To generate the processed monitoring data, the measurement data and/or inspection data associated with a respective coating pattern or group of coating patterns and the corresponding coordinate values is replaced by the compressed measurement data and/or inspection data.

The representative value may include at least one of an average, a standard deviation, a median, a maximum value, and a minimum value of the measurement data and/or inspection data of each pattern.

Pattern identification codes and the coordinate values of a start and end boundary of the respective pattern on which the measurement data and/or inspection data are collected may be determined based on the pattern identification data and the coordinate data. Alternatively, pattern identification codes and coordinate values of the start and end boundaries of a portion of the electrode sheet corresponding to multiple patterns grouped together may be determined.

The measurement data and/or inspection data are processed according to a set method, and thus the quality indicator values for each pattern or groups of patterns of the electrode sheet may be determined.

The processing unit may be configured to transmit the processed monitoring data to the server system directly or through the process controller.

The server system or the server included in the server system may generate a roll map based on the processed monitoring data.

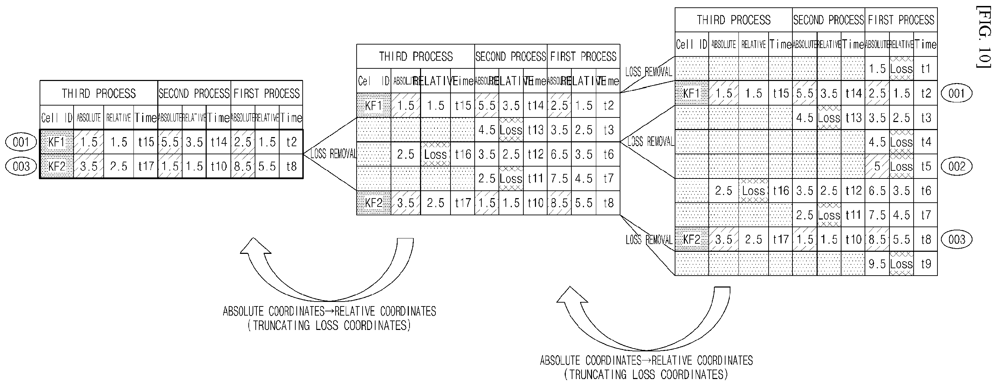

FIG. 10 shows inter-process monitoring data generated by a method according to FIG. 7 in operation P232.

A roll map for each process, which reflects pattern identification data for each process, coordinate data, and measurement data and/or inspection data for each process associated with the pattern identification data may be generated from the monitoring data.

Alternatively, the monitoring data may include inter-process monitoring data generated by matching the monitoring data generated for respective sub-processes such that pattern identification data of one sub-process and pattern identification date of another sub-process are matched with each other, insofar as they are acquired from an identical physical part of the electrode sheet.

In FIG. 10, changes in coordinate data occurring from first to third sub-processes are shown together with time data.

As exemplarily shown in FIG. 10, coordinate values of 1.5 to 9.5 are acquired from the electrode in the first sub-process, and the coordinate values are arranged in inverted order in the second sub-process. Further, the coordinate values of the second sub-process are arranged in inverted order in the third sub-process. Since the positions of the start and end portions of the electrode sheet are inverted between the sub-processes, in order to compare the data acquired in each process at identical physical parts of electrode sheet, it is advantageous to perform matching the inverted pattern identification data as shown in FIG. 10.

Further, FIG. 10 shows the portions removed from the electrode sheet in or between the respective sub-processes. When the coordinate data is shown including coordinate values on a portion removed from the electrode sheet in a respective sub-process, it is indicated as "absolute", and when the coordinate data is shown excluding the coordinate values on the removed portion, it is indicated as "relative". As extensively discussed above, the coordinate data may indicate longitudinal positions of the electrode sheet, for example, according to a pulse value of a rotary encoder. On the other hand, the pattern identification data is advantageous for indicating the positions of the electrode sheet according to the position of a respective pattern. For example, the pattern identification data may be expressed as a sub-pattern number of 0.1 units. For example, the coordinate data may be expressed in units of 0.01 m.

For example, in the first sub-process, only coordinate values 2.5, 3.5, 6.5, 7.5, and 8.5 among "absolute coordinate values" 1.5 to 9.5 remain in consideration of the loss that occurs during the first sub-process. When this data is corrected with "relative coordinate values", it becomes 1.5 to 5.5. That is, "absolute coordinate value" 2.5 in the first process corresponds to "relative coordinate value" of 1.5. These coordinate values are acquired at the same time t2. By reflecting the loss in each sub-process and considering the inversion of the start and end portions between the sub-processes, the coordinate data corresponding to the position of the same physical electrode sheet may be matched in each sub-process.

Cell IDs KF1 and KF2 may be assigned to battery cells manufactured from the surviving electrodes that are finally remaining through the first to third sub-processes. In this case, the coordinate data for each sub-process corresponding to each cell ID is the same as shown in the leftmost diagram of FIG. 10.

Further, inter-process monitoring data of FIG. 10 may be generated according to the surface inversion described above.

When surface inversion does not occur, a control logic 0 may be assigned. In this case, since the surface inversion did not occur, the coordinate data of the preceding and subsequent sub-processes may be matched through the corresponding operation as shown in FIG. 10.

When surface inversion occurs, a control logic 1 may be assigned. In this case, the server may assign the coordinate data for each sub-process on the basis of the control logic so that the absolute and relative coordinate data regarding the top side of the first process are matched with the absolute and relative coordinate data regarding the back side of the second process.

In FIG. 10, only inter-process correspondence of the coordinate data is shown, but matching between the processes may also be performed with the pattern identification data associated with the coordinate data. That is, the pattern identification data of each sub-process may be matched and/or the coordinate data of each sub-process may be matched, according at least one of the following:
when start and end portions of the electrode sheet are inverted in the following sub-process compared to the preceding sub-process, the pattern identification data and/or coordinate data of the preceding/following sub-process is inverted and matched to the pattern identification data and/or coordinate data of the following/preceding sub-process;
when a top and a bottom surface of the electrode sheet is inverted in the following sub-process compared to the preceding sub-process, the pattern identification data and/or coordinate data acquired on the top surface in the preceding/following sub-process is matched with the pattern identification data and/or coordinate data acquired on the bottom surface in the following/preceding sub-process; and
when a part of the electrode sheet is removed during the preceding sub-process or between the preceding and the following sub-process, the pattern identification data and/or coordinate data of a remaining part of the electrode sheet acquired in the following sub-process is matched with the pattern identification data and/or coordinate data of a corresponding part of the electrode sheet acquired in the preceding sub-process before removal.

In the monitoring data, pattern identification data for each process and the coordinate data are associated with the measurement data and/or inspection data. Therefore, by referring to the roll map generated based on the monitoring data, when a specific pattern number and coordinate value are selected, the measurement data and/or inspection data corresponding to the values may be identified.

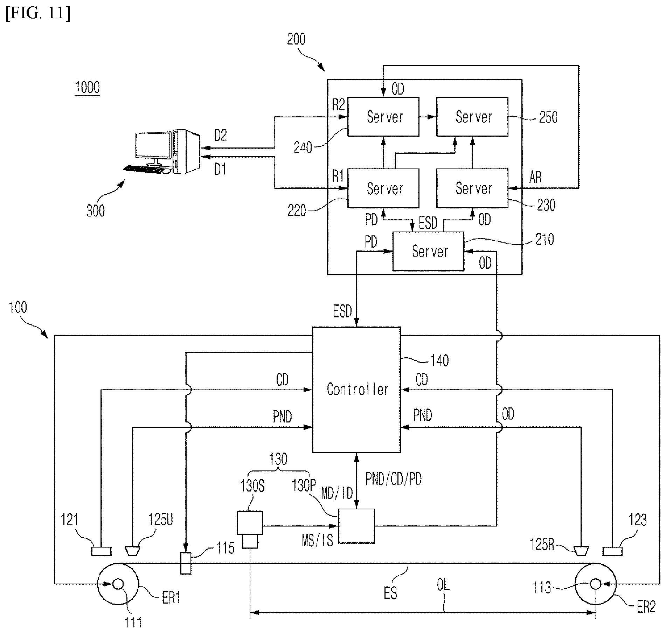

FIG. 11 exemplarily and schematically illustrates a battery manufacturing system 1000 .

The battery manufacturing system 1000 may include a battery manufacturing device 100, a server system 200, and a user device 300.

The battery manufacturing device 100 may include an unwinder 111, a rewinder 113, a processing mechanism or facility 115, first position measuring instruments 125R and 125U, second position measuring instruments 121 and 123, a measuring instrument and/or inspecting instrument 130, and a controller 140.

The unwinder 111 may be configured to unwind an electrode sheet ES from an electrode roll ER1. The rewinder 113 may be configured to wind the electrode sheet ES onto an electrode roll ER2. Accordingly, the electrode sheet ES may move between the unwinder 111 and the rewinder 113.

A process (e.g., electrode process) for battery manufacturing may be performed on the electrode sheet ES.

The electrode sheet ES may be processed by the processing mechanism or facility 115. As an example, the processing mechanism 115 may include a coater, and may apply an electrode slurry on the electrode sheet to form a patterned electrode sheet. As another example, the processing mechanism 115 may include a pressing roll, and a roll pressing process may be performed on the electrode sheet ES coated with the electrode slurry in a pattern shape. As still another example, the processing mechanism 115 may include a splicing die and a scrap pot, and a portion of the electrode sheet ES may be scrapped. As yet another example, the processing mechanism may include a slitting knife, and the electrode sheet ES may be divided into a plurality of electrode sheets.

The first position measuring instruments 125R and 125U may be pattern counters that count pattern numbers on the electrode sheet or otherwise acquire pattern identification data as explained above. The pattern identification data includes pattern identification codes, e.g., in the form of pattern numbers, that indicate positions of the respective patterns on the electrode sheet moving between the unwinder and the rewinder.

The first position measuring instrument 125U installed on the unwinder side may be configured to detect an amount or length of the electrode sheet ES unwound from the electrode roll ER1 by the unwinder 111. The controller 140 may be configured to collect pattern identification data PND generated by the first position measuring instrument 125U.

The first position measuring instrument 125R installed on the rewinder side may be configured to detect the amount or length of the electrode sheet ES wound onto the electrode roll ER2 by the rewinder 113. The controller 140 may be configured to collect pattern identification data PND generated by the first position measuring instrument 125R. The pattern identification data PND may indicate the production result of the battery manufacturing device 100, e.g., by being representative of a number of coated portions on the electrode sheet.

The second position measuring instrument may be, for example, a rotary encoder. A first rotary encoder 121 of the second position measuring instrument may be configured to detect the amount or length of the electrode sheet ES unwounded from the electrode roll ER1 by the unwinder 111. Accordingly, the first rotary encoder 121 may be configured to generate an unwinding amount signal indicating an unwinding amount or length of the electrode sheet ES. The first rotary encoder 121 may directly acquire input amount data corresponding to coordinate data by converting the unwinding amount signal. Alternatively, the first rotary encoder 121 may transmit the unwinding amount signal to the controller 140, and the controller 140 may convert the signal into the input amount data. The input amount data is representative of the amount or length of material (i.e., electrode roll ER1) input into the battery manufacturing device 100 to manufacture a battery, and is coordinate data CD.

A second rotary encoder 123 may be configured to detect the amount of the electrode sheet ES wound onto the electrode roll ER2 by the rewinder 113. Accordingly, the second rotary encoder 123 may be configured to generate a winding amount signal indicating a winding amount or length of the electrode sheet ES. The second rotary encoder 123 may convert the winding amount signal to directly acquire consumption amount data corresponding to coordinate data. Alternatively, the second rotary encoder 123 may transmit the winding amount signal to the controller 140, and the controller 140 may convert the signal into the consumption amount data. The consumption amount data may indicate the production result of the battery manufacturing device 100.

Hereinafter, an example will be described in which the controller 140 collects pattern identification data PND and coordinate data CD generated by the first position measuring instrument 125R and the second position measuring instrument 123. However, the invention is not limited to this example.

As a non-limiting example, the controller 140 may be a process controller that controls the respective sub-process, e.g., by controlling rotation of the rewinder 113 and the unwinder 111 and/or the processing facility 115. The controller 140, for example, may be a Programmable Logic Controller (PLC). The controller 140 may include a power supply, a central processing unit (CPU), an input interface, an output interface, a communication interface, and memory devices. The communication interface may be configured to perform transmission or reception of data between the controller 140 and the first position measuring instruments 125U and 125R, the second position measuring instruments 121 and 123, the measuring instrument and/or inspecting instrument 130, and the server system 200.

The measuring instrument may be configured to collect measurement data MD by measuring the electrode sheet ES. The inspecting instrument may be configured to collect inspection data ID by inspecting the electrode sheet ES. One or more measuring instruments or the inspecting instruments may be provided. In the present embodiment, for convenience of description, the measuring instrument and/or inspecting instrument are combined and indicated by one reference numeral 130.

The measuring instrument and/or inspecting instrument may include a sensing unit 130S and a processing unit 130P. The sensing unit 130S may be configured to detect a physical quantity of the electrode sheet ES to generate a measurement signal MS or an inspection signal IS. For example, the sensing unit 130S may include a time delay and Integration (TDI) camera, a complementary metal oxide semiconductor (CMOS) image sensor, a time of flight (TOF) sensor, etc.

The processing unit 130P may be configured to receive the measurement signal MS or inspection signal IS detected by the sensing unit 130S to collect the measurement data MD of the inspection data ID. The processing unit 130P may be connected to the sensing unit 130S in a wired or wireless manner.

The controller 140 may collect the measurement data and/or inspection data MD/ID generated by the measuring instrument and/or inspecting instrument 130. Further, the controller 140 may be configured to control the operations of the unwinder 111, the rewinder 113, and the processing mechanism 115. Signals for activating and stopping the unwinder 111, the rewinder 113, and the processing mechanism 115 may be generated based on electrode specification data (ESD), additional inspection signals, and measurement signals.

Pattern identification codes, e.g., in the form of pattern numbers, included in the pattern identification data PND may be associated with the measurement data and/or inspection data MD/ID. For example, the pattern identification codes collected based on a specific time or time section may be associated with the measurement data and/or inspection data MD/ID matching the same time or time section. The processing unit 130P of the measuring instrument and/or inspecting instrument may receive the pattern identification data PND from the first position measuring instruments 125U and 125R and associate the pattern identification codes with the measurement data and/or inspection data. Alternatively, the pattern identification data and the measurement data and/or inspection data may be transmitted to the controller 140 so that the pattern identification codes may be associated with the measurement data and/or inspection data in the controller 140.

Further, the processing unit 130P of the measuring instrument and/or inspecting instrument may receive the coordinate data CD from the second position measuring instruments 121 and 123 and associate the coordinate data with the pattern identification data and the measurement data and/or inspection data. Alternatively, the coordinate data and the measurement data and/or inspection data may be transmitted to the controller 140 so that the coordinate data may be associated with the pattern identification data and the measurement data and/or inspection data in the controller.

Optionally, if required, the measuring instrument and/or inspecting instrument 130 or the controller 140 may correct the pattern identification data PND and the coordinate data CD based on an offset length OL.

Since the positions of the measuring instrument and/or inspecting instrument and the first position measuring instrument are different, a portion of the electrode sheet ES that is measured and/or inspected and a portion of the electrode sheet ES on which the pattern identification codes are acquired by the first position measuring instrument may be different at the same time point. Likewise, since the positions of the measuring instrument and/or inspecting instrument and the second position measuring instrument are different, a portion of the electrode sheet ES that is measured and/or inspected and a portion of the electrode sheet on which a pattern identification code is acquired by the second position measuring instrument at the same time point may be different.

Therefore, the pattern identification code may be corrected by adding or subtracting the a number of pattern identification codes acquired in a section of the electrode sheet corresponding to the offset length to or from the pattern number of the pattern identification data collected at the same time as the measurement data and/or inspection data, so that the measurement data and/or inspection data associated with the corrected pattern identification codes may be generated by associating the corrected pattern identification code with the measurement data and/or inspection data. Further, the coordinate values may be corrected by adding or subtracting the offset length to or from the coordinate values of the coordinate data collected at the same time as the measurement data and/or inspection data, and the measurement data and/or inspection data associated with the corrected coordinate data may be generated by associating the corrected coordinate values with the measurement data and/or inspection data.

The correction of the pattern identification data and/or coordinate data may be performed by the processing unit 130P of the measuring instrument and/or inspecting instrument, or the controller 140.

The monitoring data generated by the processing unit 130P by associating measurement data and/or inspection data associated with the pattern identification data may be transmitted to the server system 200 directly or through the controller 140. Alternatively, the monitoring data generated by the controller 140 may be transmitted to the server system 200.

The monitoring data generated by the processing unit 130P by associating the measurement data and/or inspection data associated with the coordinate data and the the pattern identification data may be transmitted to the server system 200 directly or through the controller 140. Alternatively, the monitoring data may be generated by the controller 140 and transmitted to the server system 200.

The server system 200 may generate processed monitoring data for battery manufacturing on the basis of the pattern identification data PND and the measurement data and/or inspection data and, optionally, the coordinate data CD associated with the pattern identification data. This may include, as described above with reference to the method shown in FIGS. 3 and 7, generating inter-process data by matching the monitoring data generated for respective sub-processes such that pattern identification data of one sub-process and pattern identification date of another sub-process are matched with each other, insofar as they are acquired from an identical physical part of the electrode sheet, and/or generating processed monitoring data with compressed measurement data and/or inspection data, by reducing the amount of measurement and/or inspection values associated with the pattern identification data.

As also explained above, with respect to the monitoring methods, the server system may generate at least one of the following:
i) based on the monitoring data, processed monitoring data with compressed measurement data and/or inspection data, by reducing the amount of measurement and/or inspection values associated with the pattern identification data;
ii) inter-process monitoring data by matching the monitoring data generated for respective sub-processes such that pattern identification data of one sub-process and pattern identification date of another sub-process are matched with each other, insofar as they are acquired from an identical physical part of the electrode sheet.

Further, the server system may generate at least one of the following:
i) based on the monitoring data, processed monitoring data with compressed measurement data and/or inspection data, by reducing the amount of measurement and/or inspection values associated with the pattern identification data and the coordinate data;
ii) inter-process monitoring data by matching the monitoring data generated for respective sub-processes such that pattern identification data of one sub-process and pattern identification date of another sub-process are matched with each other, insofar as they are acquired from an identical physical part of the electrode sheet

The processing unit 130P of the measuring instrument and/or inspecting instrument 130 may be configured to generate the compressed measurement data and/or inspection data on the basis of the pattern identification data and the measurement data and/or inspection data. Alternatively, the processing unit 130P of the measuring instrument and/or inspecting instrument 130 may be configured to generate the compressed measurement data and/or inspection data on the basis of the pattern identification data, the coordinate data, and the measurement data and/or inspection data. The compressed measurement data and/or inspection data may include a representative value of measurement values and/or inspection values of the measurement data and/or inspection data, and pattern identification data and coordinate data for starting and ending points of a portion of the electrode sheet in which the measurement data and/or inspection data are collected. Generally, the processing unit 130P may be configured to carry out operations P131, P231 of the methods of FIGS. 3 and 7.

Original data OD (pattern identification data, coordinate data, and measurement data and/or inspection data associated with pattern identification data and coordinate data) acquired by the processing unit 130P and the compressed measurement data and/or inspection data PD may be transmitted to the server system 200 through different paths.

For example, the compressed measurement data and/or inspection data PD may be transmitted from the processing unit 130P to the server system 200 through the controller 140. The original data OD may be directly transmitted from the processing unit 130P to the server system 200.

The server system 200 may include a plurality of servers 210, 220, 230, 240, and 250 to perform each function.

The compressed measurement data and/or inspection data PD may be transmitted to the server 220 via the server 210 within the server system 200. The server 210 may be a program for communication between the process controller 140 of a manufacturing facility and the server 220 for manufacturing management. The server 210 may be implemented in hardware. The server 210 may be configured to convert the electrode specification data ESD transmitted from the server 220 into the language of the controller 140. Further, the server 210 may be configured to convert the compressed measurement data and/or inspection data PD into the language of the server 220 and record the compressed measurement data and/or inspection data PD in a database of the server 220.

The server 220 may be configured to generate a roll map. The roll map may include data regarding specifications of a lot. The specifications of the lot may include, for example, a lot number, a length of the wound electrode sheet ES, a width of the electrode sheet ES, and materials and compositions used in processing the electrode sheet ES.

For example, the server 220 may be a data processing system that supports all activities necessary to manage the manufacturing of secondary batteries, such as work schedule management, work instructions, quality control, and work performance tally. The server 220 may be, for example, a manufacturing execution system (MES). The server 220 may be configured to perform input, processing, output, and communication of data required for electrode manufacturing processes such as a coating process, a roll pressing process, and a slitting process.

The server 230 may be configured to store large-sized original data OD, that is, original data OD including raw data. The server 230 may be configured to transmit the original data OD to the server 240 in response to an application programming interface (API) request AR of the server 240. The API request AR may include information for identifying measurement data and/or inspection data associated with pattern identification data and/or the coordinate data. The API request AR may include, for example, a timestamp, a start pattern number, an end pattern number, a start coordinate, and an end coordinate.

The server 240 may be configured to store and process measurement data and/or inspection data of the electrode sheet ES. The server 240 may manage the quality of processing of the electrode sheet ES by continuously monitoring the processing of the electrode sheet ES on the basis of the measurement data and/or inspection data. According to the exemplary embodiments of, the server 240 may be a statistical process controller (SPC). By collecting and analyzing manufacturing data in near real time, the server 240 may identify problem conditions in a timely manner and provide alerts to operators before potential problems occur.

The server 250 may be configured to store data of the servers 220, 230, and 240. The server 250 may be configured to store the original data OD and the compressed data PD. The server 250 may be, for example, a data warehouse and may store necessary data for a long period of time on the basis of the quality warranty period of a product, etc. Accordingly, tracking of the manufacturing process according to the product life cycle may be provided.

Since the server 220 stores and processes a large amount of data regarding general manufacturing management other than the roll map, the roll map stored in the server 220 may include small-sized compressed data PD instead of large-sized original data. The server 220 may provide a roll map in response to a request from the user device 300.

The server 240 may provide a roll map including the original data OD. Further, as described with reference to FIGS. 5, 6, and 10, the server 240 may generate inter-process monitoring data in which the pattern identification data for each process is displayed to be matched with each other so as to correspond to the position of the same physical electrode sheet. Further, the server 240 may generate inter-process monitoring data in which coordinate data of each process is displayed to be matched with each other so as to correspond to the position of the same physical electrode sheet.

That is, the server 240 may calculate pattern identification data and coordinate data corresponding to the position of the physical electrode sheet in consideration of the start-to-end inversion of the electrode and electrode loss between the plurality of processes on the basis of the time or time section of the electrode sheet (see FIGS. 5 and 10). Further, the server 240 may determine whether the surface is inverted between the preceding sub-process and the subsequent sub-process and match the pattern identification data and coordinate data of the preceding sub-process and the subsequent sub-process, respectively, so that the surfaces of the electrode sheets correspond to each other as explained above. In this case, the server 240 may assign a control logic 0 or 1 to the monitoring data acquired for each sub-process depending on whether the surface is inverted. The server 240 may be equipped with a separate or integrated calculation unit or calculation programs that rearrange, calculate, and correspond to data according to the start-to-end inversion of the electrode, electrode loss, and electrode surface inversion.

The server 240 may generate an overlay roll map in which the pattern identification data and coordinate data of the roll map of each process are respectively corrected to the same value on the basis of the inter-process monitoring data to which each piece of data corresponds. The overlay roll map may allow intuitive understanding of the plurality of processes and may be said to be an intermediate roll map that is one step more advanced than a normal roll map.

The user device 300 may display a visualized roll map (VRM). The user device 300 may be any device for communicating with the server system 200, such as a workstation computer, a notebook computer, a laptop computer, a desktop computer, a tablet computer, a mobile device such as a smart phone, or a wearable device. The user device 300 may be configured to generate a request R1 for loading a roll map or a request R2 for loading an intermediate roll map. The user device 300 may be configured to transmit the requests R1 and R2 to the server system 200. The user device 300 may include input tools for inputting the requests R1 and R2 and a display device for displaying a visualized roll map (VRM).

The servers 210, 220, 230, 240, and 250 may include physical servers or cloud servers. The servers 210, 220, 230, 240, and 250 may include various application programming interfaces (APIs) for storing data in databases and other data management tools.

The present invention has been described above in more detail through the drawings and examples. However, the embodiments described in this specification and configurations illustrated in drawings are only exemplary embodiments of the invention defined in the appended claims.

### [List of reference signs]

10, 1000: battery manufacturing system
100: battery manufacturing device
200: server system
111: unwinder
113: rewinder
115: processing mechanism
125U, 125R: first position measuring instrument
121, 123: second position measuring instrument (first rotary encoder, second rotary encoder)
130: measuring instrument
130P: sensing unit
130S: processing unit
140: controller
300: user device

## Claims

1. A method for monitoring a battery manufacturing process in which a patterned electrode sheet is formed or processed in multiple sub-processes, wherein the patterned electrode sheet includes a plurality of coating patterns, each coating pattern having at least one coated portion (2) and one uncoated portion (1), the method being carried out by a system comprising a first position measuring device (123R, 123U), and a measuring and/or an inspecting device (130), the method comprising:
acquiring, by a first position measuring device (123R, 123U) while the patterned electrode sheet moves through the battery manufacturing process, pattern identification data including pattern identification codes indicating positions of the respective coating patterns on the electrode sheet;
acquiring, by a measuring and/or an inspecting device (130), measurement data and/or inspection data by measuring and/or inspecting the electrode sheet while it moves through the battery manufacturing process, the measurement data and/or inspection data including a plurality of measurement and/or inspection values for each coating pattern;
generating monitoring data for the multiple sub-processes by associating the measurement data and/or inspection data with the pattern identification data; and
matching the monitoring data generated for respective sub-processes such that pattern identification data for a respective coating pattern acquired in one sub-process and pattern identification data for the same coating pattern acquired in another sub-process are matched with each other.

2. The method of claim 1, wherein the pattern identification data of a following sub-process carried out subsequent to a preceding process are matched according to at least one of the following:
when start and end portions of the electrode sheet are inverted in the following sub-process compared to the preceding sub-process, the pattern identification data of the preceding/following sub-process is inverted and matched to the pattern identification data of the following/preceding sub-process;
when a top and a bottom surface of the electrode sheet is inverted in the following sub-process compared to the preceding sub-process, the pattern identification data acquired on the top surface in the preceding/following sub-process is matched with the pattern identification data acquired on the bottom surface in the following/preceding sub-process; and
when a part of the electrode sheet is removed during the preceding sub-process or between the preceding and the following sub-process, the pattern identification data of a remaining part of the electrode sheet acquired in the following sub-process is matched with the pattern identification data of a corresponding part of the electrode sheet acquired in the preceding sub-process before removal.

3. The method of claim 1 or 2, further comprising:
based on the monitoring data, generating processed monitoring data with compressed measurement data and/or inspection data, by reducing the amount of measurement and/or inspection values associated with the pattern identification data.

4. The method of claim 3, wherein reducing the amount of measurement and/or inspection values associated with the pattern identification data includes:
selecting, for a respective coating pattern or group of coating patterns respectively represented by the pattern identification data, a subset of the plurality of measurement and/or inspection values associated with the respective coating pattern or group of coating patterns; and
replacing the plurality of measurement and/or inspection values associated with the respective coating pattern or group of coating patterns by the selected subset of measurement and/or inspection values.

5. The method of claim 3 or 4, wherein reducing the amount of measurement and/or inspection values associated with the pattern identification data includes:
determining a representative measurement and/or inspection value based on the plurality of measurement and/or inspection values associated with a respective coating pattern or group of coating patterns respectively represented by the pattern identification data, and
replacing the plurality of measurement and/or inspection values associated with the respective coating pattern or group of coating patterns by the representative measurement and/or inspection value.

6. The method of any one of the preceding claims, further comprising:
acquiring coordinate data that indicates longitudinal positions on the electrode sheet,
wherein generating the monitoring data includes associating the coordinate data with the pattern identification data and the measurement data and/or inspection data.

7. The method of any one of the preceding claims, wherein the pattern identification data, the measurement data and/or inspection data, and, optionally, the coordinate data are acquired as time series data and associated with each other such that they share common time values at which they are acquired.

8. The method of any one of the claims 3 to 7, insofar as being dependent upon claim 3, further comprising:
generating, by a server system (200), a roll map for one or more of the sub-processes based on the processed monitoring data, the roll map being a visual representation of the electrode in which the pattern identification data of the respective sub-process and the compressed measurement data and/or inspection data for the respective sub-process associated with the pattern identification data are displayed, and visualizing the roll map and displaying the visualized roll map by means of a display (190).

9. The method of any one of the preceding claims, further comprising:
generating, by a server system (200), a roll map for the multiple sub-processes based on the monitoring data, the roll map being a visual representation of the electrode in which the pattern identification data of the respective one of the sub-processes are displayed, and visualizing the roll map and displaying the visualized roll map by means of a display (190), wherein the generated roll maps are matched with each other so that the pattern identification data acquired in respective sub-processes are matched with one another, insofar as they are acquired from an identical physical part of the electrode sheet.

10. A system for monitoring a battery manufacturing process according to a method of any one of the preceding claims, comprising:
a first position measuring device (123R, 123U) configured to acquire the pattern identification data; and
a measuring and/or an inspecting device (130) configured to acquire the measurement data and/or inspection data,
wherein the system is configured to generate the monitoring data for the multiple sub-processes by associating the measurement data and/or inspection data with the pattern identification data and to match the monitoring data generated for respective sub-processes such that pattern identification data for a respective coating pattern acquired in one sub-process and pattern identification data for the same coating pattern acquired in another sub-process are matched with each other.

11. The system of claim 10, wherein the system is further configured, based on the monitoring data, to generate the processed monitoring data with compressed measurement data and/or inspection data, by reducing the amount of measurement and/or inspection values associated with the pattern identification data.

12. The system of claim 10 or 11, further comprising:
a server system (200) in signal communication with the first position measuring device (123R, 123U) and the measuring and/or an inspecting device (130), wherein the server system (200) is configured to generate the monitoring data and match the monitoring data generated for respective sub-processes, and optionally, to generate the processed monitoring data.

13. The system of claim 12, insofar as referring to claim 8, wherein the server system (200) is configured to generate a roll map for one or more of the sub-processes based on the processed monitoring data, and transmit a visualization command to a display device (190), wherein the display device (190) is configured to visualize the roll map and display the visualized roll map(s).

14. The system of any of claim 12 or 13, insofar as referring to claim 9, wherein the server system (200) is configured to generate a roll map for the multiple sub-processes based on the monitoring data, and transmit a visualization command to a display device (190), wherein the display device (190) is configured to visualize the roll map and display the visualized roll maps.

15. The system of any one of claims 10 to 13, insofar as referring to claim 6, further comprising:
a second position measuring instrument (121, 123) configured to acquire the coordinate data,
wherein the system is configured to associate the coordinate data with the pattern identification data and the measurement data and/or inspection data to generate the monitoring data.

16. The system of any one of claims 10 to 14, further comprising:
a controller (140) configured to control movement of the electrode sheet,
wherein the controller (140) and/or the measuring and/or an inspecting device (130) is configured to associate the pattern identification data with the measurement data and/or inspection data and, optionally, with the coordinate data to generate the monitoring data.

## Patentansprüche

1. Verfahren zur Überwachung eines Batterieherstellungsprozesses, bei dem eine strukturierte Elektrodenbahn in mehreren Teilprozessen gebildet oder verarbeitet wird, wobei die strukturierte Elektrodenbahn eine Vielzahl von Beschichtungsstrukturen umfasst, wobei jede Beschichtungsstruktur mindestens einen beschichteten Abschnitt (2) und einen unbeschichteten Abschnitt (1) aufweist, wobei das Verfahren durch ein System durchgeführt wird, das eine erste Positionsmessvorrichtung (123R, 123U) und eine Mess- und/oder Inspektionsvorrichtung (130) umfasst, wobei das Verfahren Folgendes umfasst:
Erfassen von Strukturidentifikationsdaten, die Strukturidentifikationscodes umfassen, welche Positionen der jeweiligen Beschichtungsstrukturen auf der Elektrodenbahn angeben, durch eine erste Positionsmessvorrichtung (123R, 123U), während sich die strukturierte Elektrodenbahn durch den Batterieherstellungsprozess bewegt;
Erfassen von Messdaten und/oder Inspektionsdaten durch eine Mess- und/oder Inspektionsvorrichtung (130) durch Messen und/oder Inspizieren der Elektrodenbahn, während sie sich durch den Batterieherstellungsprozess bewegt, wobei die Messdaten und/oder Inspektionsdaten eine Vielzahl von Mess- und/oder Inspektionswerten für jede Beschichtungsstruktur umfassen;
Erzeugen von Überwachungsdaten für die mehreren Teilprozesse durch Verknüpfen der Messdaten und/oder Inspektionsdaten mit den Strukturidentifikationsdaten; und
Abgleichen der für jeweilige Teilprozesse erzeugten Überwachungsdaten derart, dass in einem Teilprozess erfasste Strukturidentifikationsdaten für eine jeweilige Beschichtungsstruktur und in einem anderen Teilprozess erfasste Strukturidentifikationsdaten für dieselbe Beschichtungsstruktur miteinander abgeglichen werden.

2. Verfahren nach Anspruch 1, wobei die Strukturidentifikationsdaten eines nachfolgenden Teilprozesses, der im Anschluss an einen vorausgehenden Prozess durchgeführt wird, auf mindestens eine der folgenden Weisen abgeglichen werden:
wenn Anfangs- und Endabschnitte der Elektrodenbahn im nachfolgenden Teilprozess gegenüber dem vorausgehenden Teilprozess vertauscht sind, werden die Strukturidentifikationsdaten des vorausgehenden/nachfolgenden Teilprozesses umgekehrt und mit den Strukturidentifikationsdaten des nachfolgenden/vorausgehenden Teilprozesses abgeglichen;
wenn eine Oberseite und eine Unterseite der Elektrodenbahn im nachfolgenden Teilprozess gegenüber dem vorausgehenden Teilprozess vertauscht sind, werden die im vorausgehenden/nachfolgenden Teilprozess auf der Oberseite erfassten Strukturidentifikationsdaten mit den im nachfolgenden/vorausgehenden Teilprozess auf der Unterseite erfassten Strukturidentifikationsdaten abgeglichen; und
wenn ein Teil der Elektrodenbahn während des vorausgehenden Teilprozesses oder zwischen dem vorausgehenden und dem nachfolgenden Teilprozess entfernt wird, werden die im nachfolgenden Teilprozess erfassten Strukturidentifikationsdaten eines verbleibenden Teils der Elektrodenbahn mit den im vorausgehenden Teilprozess vor der Entfernung erfassten Strukturidentifikationsdaten eines entsprechenden Teils der Elektrodenbahn abgeglichen.

3. Verfahren nach Anspruch 1 oder 2, ferner umfassend:
auf Grundlage der Überwachungsdaten Erzeugen verarbeiteter Überwachungsdaten mit komprimierten Messdaten und/oder Inspektionsdaten durch Verringern der Anzahl der Mess- und/oder Inspektionswerte, die mit den Strukturidentifikationsdaten verknüpft sind.

4. Verfahren nach Anspruch 3, wobei das Verringern der Anzahl der Mess- und/oder Inspektionswerte, die mit den Strukturidentifikationsdaten verknüpft sind, Folgendes umfasst:
Auswählen einer Teilmenge aus der Vielzahl von Mess- und/oder Inspektionswerten, die mit der jeweiligen Beschichtungsstruktur oder der Gruppe von Beschichtungsstrukturen verknüpft sind, für eine jeweilige, durch die Strukturidentifikationsdaten dargestellte Beschichtungsstruktur oder eine jeweils durch die Strukturidentifikationsdaten dargestellte Gruppe von Beschichtungsstrukturen; und
Ersetzen der Vielzahl von Mess- und/oder Inspektionswerten, die mit der jeweiligen Beschichtungsstruktur oder der Gruppe von Beschichtungsstrukturen verknüpft sind, durch die ausgewählte Teilmenge von Mess- und/oder Inspektionswerten.

5. Verfahren nach Anspruch 3 oder 4, wobei das Verringern der Anzahl der Mess- und/oder Inspektionswerte, die mit den Strukturidentifikationsdaten verknüpft sind, Folgendes umfasst:
Bestimmen eines repräsentativen Mess- und/oder Inspektionswerts auf Grundlage der Vielzahl von Mess- und/oder Inspektionswerten, die mit einer jeweiligen, durch die Strukturidentifikationsdaten dargestellten Beschichtungsstruktur oder einer jeweils durch die Strukturidentifikationsdaten dargestellten Gruppe von Beschichtungsstrukturen verknüpft sind, und
Ersetzen der Vielzahl von Mess- und/oder Inspektionswerten, die mit der jeweiligen Beschichtungsstruktur oder der Gruppe von Beschichtungsstrukturen verknüpft sind, durch den repräsentativen Mess- und/oder Inspektionswert.

6. Verfahren nach einem der vorhergehenden Ansprüche, ferner umfassend:
Erfassen von Koordinatendaten, die Längspositionen auf der Elektrodenbahn angeben, wobei das Erzeugen der Überwachungsdaten das Verknüpfen der Koordinatendaten mit den Strukturidentifikationsdaten und den Messdaten und/oder Inspektionsdaten umfasst.

7. Verfahren nach einem der vorhergehenden Ansprüche, wobei die Strukturidentifikationsdaten, die Messdaten und/oder Inspektionsdaten und optional die Koordinatendaten als Zeitreihendaten erfasst und derart miteinander verknüpft werden, dass sie gemeinsame Zeitwerte aufweisen, zu denen sie erfasst werden.

8. Verfahren nach einem der Ansprüche 3 bis 7, soweit von Anspruch 3 abhängig, ferner umfassend:
Erzeugen einer Rollenkarte für einen oder mehrere der Teilprozesse durch ein Serversystem (200) auf Grundlage der verarbeiteten Überwachungsdaten, wobei die Rollenkarte eine visuelle Darstellung der Elektrode ist, in der die Strukturidentifikationsdaten des jeweiligen Teilprozesses und die mit den Strukturidentifikationsdaten verknüpften komprimierten Messdaten und/oder Inspektionsdaten für den jeweiligen Teilprozess angezeigt werden, und Visualisieren der Rollenkarte und Anzeigen der visualisierten Rollenkarte mittels einer Anzeige (190).

9. Verfahren nach einem der vorhergehenden Ansprüche, ferner umfassend:
Erzeugen einer Rollenkarte für die mehreren Teilprozesse durch ein Serversystem (200) auf Grundlage der Überwachungsdaten, wobei die Rollenkarte eine visuelle Darstellung der Elektrode ist, in der die Strukturidentifikationsdaten des jeweiligen Teilprozesses angezeigt werden, und Visualisieren der Rollenkarte und Anzeigen der visualisierten Rollenkarte mittels einer Anzeige (190), wobei die erzeugten Rollenkarten miteinander abgeglichen werden, sodass die in jeweiligen Teilprozessen erfassten Strukturidentifikationsdaten miteinander abgeglichen werden, soweit sie von einem identischen physischen Teil der Elektrodenbahn erfasst werden.

10. System zur Überwachung eines Batterieherstellungsprozesses gemäß einem Verfahren nach einem der vorhergehenden Ansprüche, umfassend:
eine erste Positionsmessvorrichtung (123R, 123U), die dazu eingerichtet ist, die Strukturidentifikationsdaten zu erfassen; und
eine Mess- und/oder Inspektionsvorrichtung (130), die dazu eingerichtet ist, die Messdaten und/oder Inspektionsdaten zu erfassen,
wobei das System dazu eingerichtet ist, die Überwachungsdaten für die mehreren Teilprozesse durch Verknüpfen der Messdaten und/oder Inspektionsdaten mit den Strukturidentifikationsdaten zu erzeugen und die für jeweilige Teilprozesse erzeugten Überwachungsdaten derart abzugleichen, dass in einem Teilprozess erfasste Strukturidentifikationsdaten für eine jeweilige Beschichtungsstruktur und in einem anderen Teilprozess erfasste Strukturidentifikationsdaten für dieselbe Beschichtungsstruktur miteinander abgeglichen werden.

11. System nach Anspruch 10, wobei das System ferner dazu eingerichtet ist, auf Grundlage der Überwachungsdaten die verarbeiteten Überwachungsdaten mit komprimierten Messdaten und/oder Inspektionsdaten durch Verringern der Anzahl der mit den Strukturidentifikationsdaten verknüpften Mess- und/oder Inspektionswerte zu erzeugen.

12. System nach Anspruch 10 oder 11, ferner umfassend:
ein Serversystem (200) in Signalverbindung mit der ersten Positionsmessvorrichtung (123R, 123U) und der Mess- und/oder Inspektionsvorrichtung (130), wobei das Serversystem (200) dazu eingerichtet ist, die Überwachungsdaten zu erzeugen und die für jeweilige Teilprozesse erzeugten Überwachungsdaten abzugleichen und optional die verarbeiteten Überwachungsdaten zu erzeugen.

13. System nach Anspruch 12, soweit auf Anspruch 8 rückbezogen, wobei das Serversystem (200) dazu eingerichtet ist, auf Grundlage der verarbeiteten Überwachungsdaten eine Rollenkarte für einen oder mehrere der Teilprozesse zu erzeugen und einen Visualisierungsbefehl an eine Anzeigevorrichtung (190) zu übertragen, wobei die Anzeigevorrichtung (190) dazu eingerichtet ist, die Rollenkarte zu visualisieren und die visualisierte(n) Rollenkarte(n) anzuzeigen.

14. System nach Anspruch 12 oder 13, soweit auf Anspruch 9 rückbezogen, wobei das Serversystem (200) dazu eingerichtet ist, auf Grundlage der Überwachungsdaten eine Rollenkarte für die mehreren Teilprozesse zu erzeugen und einen Visualisierungsbefehl an eine Anzeigevorrichtung (190) zu übertragen, wobei die Anzeigevorrichtung (190) dazu eingerichtet ist, die Rollenkarte zu visualisieren und die visualisierten Rollenkarten anzuzeigen.

15. System nach einem der Ansprüche 10 bis 13, soweit auf Anspruch 6 rückbezogen, ferner umfassend:
ein zweites Positionsmessinstrument (121, 123), das dazu eingerichtet ist, die Koordinatendaten zu erfassen,
wobei das System dazu eingerichtet ist, die Koordinatendaten mit den Strukturidentifikationsdaten und den Messdaten und/oder Inspektionsdaten zu verknüpfen, um die Überwachungsdaten zu erzeugen.

16. System nach einem der Ansprüche 10 bis 14, ferner umfassend:
eine Steuereinheit (140), die dazu eingerichtet ist, die Bewegung der Elektrodenbahn zu steuern,
wobei die Steuereinheit (140) und/oder die Mess- und/oder Inspektionsvorrichtung (130) dazu eingerichtet ist, die Strukturidentifikationsdaten mit den Messdaten und/oder Inspektionsdaten und optional mit den Koordinatendaten zu verknüpfen, um die Überwachungsdaten zu erzeugen.

## Revendications

1. Procédé de surveillance d'un processus de fabrication de batterie où une feuille d'électrode à motifs est formée ou traitée au cours de plusieurs sous-processus, ladite feuille d'électrode à motifs présentant une pluralité de motifs de revêtement, chaque motif de revêtement ayant au moins une partie revêtue (2) et une partie non revêtue (1), ledit procédé étant mis en œuvre par un système comprenant un premier dispositif de mesure de position (123R, 123U) et un dispositif de mesure et/ou d'inspection (130), ledit procédé comprenant :
l'acquisition, par un premier dispositif de mesure de position (123R, 123U), pendant que la feuille d'électrode à motifs se déplace au cours du processus de fabrication de batterie, de données d'identification de motif comprenant des codes d'identification de motif indiquant les positions des motifs de revêtement respectifs sur la feuille d'électrode ;
l'acquisition, par un dispositif de mesure et/ou d'inspection (130), de données de mesure et/ou de données d'inspection par mesure et/ou inspection de la feuille d'électrode pendant qu'elle se déplace au cours du processus de fabrication de batterie, lesdites données de mesure et/ou d'inspection comprenant une pluralité de valeurs de mesure et/ou d'inspection pour chaque motif de revêtement ;
la génération de données de surveillance pour la pluralité de sous-processus par association des données de mesure et/ou des données d'inspection aux données d'identification de motif ; et
la mise en correspondance des données de surveillance générées pour des sous-processus respectifs de manière à mettre en correspondance des données d'identification de motif pour un motif de revêtement respectif acquises au cours d'un sous-processus avec des données d'identification de motif pour le même motif de revêtement acquises au cours d'un autre sous-processus.

2. Procédé selon la revendication 1, où les données d'identification de motif d'un sous-processus suivant exécuté à la suite d'un processus précédent sont mises en correspondance conformément à au moins l'une des procédures ci-dessous :
si des parties de début et de fin de la feuille d'électrode sont inversées au cours du sous-processus suivant par rapport au sous-processus précédent, les données d'identification de motif du sous-processus précédent/suivant sont inversées et mises en correspondance avec les données d'identification de motif du sous-processus suivant/précédent ;
si une surface supérieure et une surface inférieure de la feuille d'électrode sont inversées au cours du sous-processus suivant par rapport au sous-processus précédent, les données d'identification de motif acquises sur la surface supérieure au cours du sous-processus précédent/suivant sont mises en correspondance avec les données d'identification de motif acquises sur la surface inférieure au cours du sous-processus suivant/précédent ; et
si une partie de la feuille d'électrode est retirée au cours du sous-processus précédent ou entre le sous-processus précédent et le sous-processus suivant, les données d'identification de motif d'une partie restante de la feuille d'électrode acquises au cours du sous-processus suivant sont mises en correspondance avec les données d'identification de motif d'une partie correspondante de la feuille d'électrode acquises au cours du sous-processus précédent avant retrait.

3. Procédé selon la revendication 1 ou la revendication 2, comprenant en outre : sur la base des données de surveillance, la génération de données de surveillance traitées avec des données de mesure et/ou d'inspection compressées, par réduction de la quantité de valeurs de mesure et/ou d'inspection associées aux données d'identification de motif.

4. Procédé selon la revendication 3, où la réduction de la quantité de valeurs de mesure et/ou d'inspection associées aux données d'identification de motif comprend :
la sélection, pour un motif de revêtement ou un groupe de motifs de revêtement respectifs représentés respectivement par les données d'identification de motif, d'un sous-ensemble de la pluralité de valeurs de mesure et/ou d'inspection associées au motif de revêtement ou au groupe de motifs de revêtement respectifs ; et
le remplacement de la pluralité de valeurs de mesure et/ou d'inspection associées au motif de revêtement ou au groupe de motifs de revêtement respectifs par le sous-ensemble de valeurs de mesure et/ou d'inspection sélectionné.

5. Procédé selon la revendication 3 ou la revendication 4, où la réduction de la quantité de valeurs de mesure et/ou d'inspection associées aux données d'identification de motif comprend :
la détermination d'une valeur de mesure et/ou d'inspection représentative sur la base de la pluralité de valeurs de mesure et/ou d'inspection associées à un motif de revêtement ou à un groupe de motifs de revêtement respectifs représentés respectivement par les données d'identification de motif, et
le remplacement de la pluralité de valeurs de mesure et/ou d'inspection associées au motif de revêtement ou au groupe de motifs de revêtement respectifs par la valeur de mesure et/ou d'inspection représentative.

6. Procédé selon l'une des revendications précédentes, comprenant en outre :
l'acquisition de données de coordonnées indiquant des positions longitudinales sur la feuille d'électrode,
où la génération des données de surveillance comprend l'association des données de coordonnées avec les données d'identification de motif et les données de mesure et/ou les données d'inspection.

7. Procédé selon l'une des revendications précédentes, où les données d'identification de motif, les données de mesure et/ou les données d'inspection, et facultativement les données de coordonnées sont acquises sous forme de données de séries temporelles et associées les unes aux autres de manière à partager les valeurs temporelles communes auxquelles elles sont acquises.

8. Procédé selon l'une des revendications 3 à 7, si dépendante de la revendication 3, comprenant en outre :
la génération, par un système de serveur (200), d'une carte de rouleau pour un ou plusieurs des sous-processus sur la base des données de surveillance traitées, la carte de rouleau étant une représentation visuelle de l'électrode sur laquelle sont affichées les données d'identification de motif des sous-processus respectifs et les données de mesure et/ou les données d'inspection compressées pour le sous-processus respectif associé aux données d'identification de motif, et la visualisation de la carte de rouleau et l'affichage de la carte de rouleau visualisée au moyen d'un dispositif d'affichage (190).

9. Procédé selon l'une des revendications précédentes, comprenant en outre :
la génération, par un système de serveur (200), d'une carte de rouleau pour la pluralité de sous-processus sur la base des données de surveillance, la carte de rouleau étant une représentation visuelle de l'électrode sur laquelle sont affichées les données d'identification de motif du sous-processus respectif, et la visualisation de la carte de rouleau et l'affichage de la carte de rouleau visualisée au moyen d'un dispositif d'affichage (190), les cartes de rouleau générées étant mises en correspondance les unes avec les autres de manière à mettre en correspondance entre elles les données d'identification de motif acquises au cours de sous-processus respectifs, dans la mesure où elles sont acquises d'une partie physique identique de la feuille d'électrode.

10. Système de surveillance d'un processus de fabrication de batterie conformément à un procédé selon l'une des revendications précédentes, comprenant :
un premier dispositif de mesure de position (123R, 123U) configuré pour acquérir les données d'identification de motif ; et
un dispositif de mesure et/ou d'inspection (130) configuré pour acquérir les données de mesure et/ou d'inspection,
où le système est configuré pour générer les données de surveillance pour la pluralité de sous-processus par association des données de mesure et/ou des données d'inspection aux données d'identification de motif, et pour mettre en correspondance les données de surveillance générées pour des sous-processus respectifs, de manière à mettre en correspondance des données d'identification de motif pour un motif de revêtement respectif acquises au cours d'un sous-processus avec des données d'identification de motif pour le même motif de revêtement acquises au cours d'un autre sous-processus.

11. Système selon la revendication 10, où ledit système est en outre configuré pour générer, sur la base des données de surveillance, les données de surveillance traitées avec des données de mesure et/ou d'inspection compressées, par réduction de la quantité de valeurs de mesure et/ou d'inspection associées aux données d'identification de motif.

12. Système selon la revendication 10 ou la revendication 11, comprenant en outre : un système de serveur (200) en communication de signal avec le premier dispositif de mesure de position (123R, 123U) et le dispositif de mesure et/ou d'inspection (130), ledit système de serveur (200) étant configuré pour générer les données de surveillance et mettre en correspondance les données de surveillance générées pour des sous-unités respectives, et facultativement pour générer les données de surveillance traitées.

13. Système selon la revendication 12, si dépendante de la revendication 8, où le système de serveur (200) est configuré pour générer une carte de rouleau pour un ou plusieurs des sous-processus sur la base des données de surveillance traitées, et transmettre une instruction de visualisation à un dispositif d'affichage (190), ledit dispositif d'affichage (190) étant configuré pour visualiser la carte de rouleau et afficher la ou les cartes de rouleau visualisées.

14. Système selon la revendication 12 ou la revendication 13, si dépendante de la revendication 9, où le système de serveur (200) est configuré pour générer une carte de rouleau pour la pluralité de sous-processus sur la base des données de surveillance, et transmettre une instruction de visualisation à un dispositif d'affichage (190), ledit dispositif d'affichage (190) étant configuré pour visualiser la carte de rouleau et afficher les cartes de rouleau visualisées.

15. Système selon l'une des revendications 10 à 13, si dépendante de la revendication 6, comprenant en outre :
un deuxième instrument de mesure de position (121, 123) configuré pour acquérir les données de coordonnées,
ledit système étant configuré pour associer les données de coordonnées aux données d'identification de motif et aux données de mesure et/ou aux données d'inspection afin de générer les données de surveillance.

16. Système selon l'une des revendications 10 à 14, comprenant en outre :
un dispositif de commande (140) configuré pour commander le déplacement de la feuille d'électrode,
où le contrôleur (140) et/ou le dispositif de mesure et/ou d'inspection (130) sont configurés pour associer les données d'identification de motif aux données de mesure et/ou aux données d'inspection et facultativement aux données de coordonnées afin de générer les données de surveillance.
